# EUROPEAN PATENT APPLICATION

(11) **EP 4 629 724 A1**
(43) Date of publication of application: **08.10.2025**
(21) Application number: 23905392.9
(22) Date of filing: 11.10.2023
(51) Int. Cl.: H04W 72/0453

(54) **SIGNAL TRANSMISSION METHOD, AND COMMUNICATION APPARATUS AND WIRELESS COMMUNICATION SYSTEM**

(30) Priority: 22.12.2022 CN 202211657919
(71) Applicant: Huawei Technologies Co., Ltd., Shenzhen, Guangdong 518129 (CN)
(72) Inventor: GAO, Kuandong, Shenzhen, Guangdong 518129 (CN); DU, Xianfeng, Shenzhen, Guangdong 518129 (CN); LIU, Qiao, Shenzhen, Guangdong 518129 (CN)
(74) Representative: Maiwald GmbH
(86) International application number: PCT/CN2023/124057
(87) International publication number: WO 2024/131219

(57) **Abstract**

This application discloses a signal transmission method, a communication apparatus, and a wireless communication system, and relates to the field of wireless communication technologies. The signal transmission method is applied to a communication device, and the communication device includes a signal transmission module and a noise transmission module corresponding to the signal transmission module. The method includes: transmitting a valid signal to a radio frequency processing module by using the signal transmission module; transmitting a noise signal to the radio frequency processing module by using the noise transmission module, where the noise signal is an out-of-band signal of the valid signal; and mixing the valid signal and the noise signal by using the radio frequency processing module to obtain a mixed signal. **In** this application, the noise transmission module is added to the signal transmission module. The noise signal is the out-of-band signal of the valid signal, and the radio frequency processing module shifts the valid signal and the noise signal to a frequency for transmitting a signal by a sending module, and combines the valid signal and the noise signal. Therefore, not only a peak-to-average power ratio of the valid signal is reduced, but also spectrum utilization of the signal transmission module is improved.

## Description

This application claims priority to Chinese Patent Application No. 202211657919.9, filed with the China National Intellectual Property Administration on December 22, 2022 and entitled "SIGNAL TRANSMISSION METHOD, COMMUNICATION APPARATUS, AND WIRELESS COMMUNICATION SYSTEM", which is incorporated herein by reference in its entirety.

### TECHNICAL FIELD

This application relates to the field of wireless communication technologies, and in particular, to a signal transmission method, a communication apparatus, and a wireless communication system.

### BACKGROUND

In the current 5th generation mobile communication technology (5th generation mobile communication technology, 5G) era, the future 5G+ era, and the 6G era, millimeter-wave communication and terahertz communication become research hotspots in the field of current communication technologies because of abundant frequency band resources. However, a high-frequency carrier also causes attenuation of wireless propagation, limits a wireless propagation distance, and reduces spectrum efficiency. Consequently, a coverage area of a high-frequency signal is reduced. To resolve this problem, a quantity of antenna array elements or a transmit power of a signal is generally increased. For the increase of the transmit power of the signal, a peak-to-average power ratio (peak-to-average power ratio, PAPR) of the signal is also excessively high. As a result, a power amplifier works in a non-linear area, and consequently, non-linear distortion of the signal and sharp increase of power consumption are caused.

Currently, the PAPR of the signal may be reduced by using a method of tone reservation (tone reservation, TR). However, in this method, a resource location of a reserved subcarrier needs to be configured in a data signal, reducing spectral efficiency.

### SUMMARY

This application provides a signal transmission method, a communication apparatus, and a wireless communication system, to reduce a PAPR of a signal while spectrum utilization is improved according to a method of tone reservation.

Technical solutions are as follows.

According to a first aspect, a signal transmission method is provided. The method is applied to a communication device, and the communication device includes a first signal transmission module and a noise transmission module corresponding to the first signal transmission module. The signal transmission method includes: The communication device transmits a first valid signal to a first radio frequency processing module by using the first signal transmission module. The communication device transmits a first noise signal to the first radio frequency processing module by using the noise transmission module. The first noise signal is an out-of-band signal of the first valid signal. The communication device mixes the first valid signal and the first noise signal by using the first radio frequency processing module to obtain a first mixed signal.

In this application, a communication link is added to a signal transmission module configured to transmit a to-be-transmitted signal, a valid signal in the to-be-transmitted signal is transmitted by using the signal transmission module, and a noise signal that is constructed in the to-be-transmitted signal and that corresponds to the valid signal is transmitted through the communication link. In addition, because the noise signal is a reserved subcarrier located out of a frequency band of the valid signal, utilization of a spectrum for transmitting the valid signal by the signal transmission module is improved. A radio frequency processing module shifts the valid signal and the noise signal to a frequency for transmitting a signal by a sending module, and combines the valid signal and the noise signal. In this way, a peak-to-average power ratio of the valid signal is reduced by reserving a subcarrier. The communication link is added to a signal transmission module architecture of the sending device, the valid signal is transmitted by using the signal transmission module, a signal reserving a subcarrier is transmitted through the communication link respectively, and finally combination is completed in the radio frequency processing module. In this way, the valid signal is reduced by using the reserved subcarrier, and spectrum utilization efficiency of the valid signal is further improved.

In a possible implementation of this application, after mixing the first valid signal and the first noise signal by using the first radio frequency processing module to obtain the first mixed signal, the method further includes: The communication device amplifies the first mixed signal by using the first radio frequency processing module. The communication device filters out the first noise signal from the amplified first mixed signal to obtain a first to-be-sent signal.

In a possible implementation of this application, transmitting the first valid signal to the first radio frequency processing module by using the first signal transmission module, and transmitting the first noise signal to the first radio frequency processing module by using the noise transmission module include: The communication device performs digital-to-analog conversion and filtering on the first valid signal, and then transmits the first valid signal to the first radio frequency processing module. The communication device performs digital-to-analog conversion and filtering on the first noise signal, and then transmits the first noise signal to the first radio frequency processing module.

In a possible implementation of this application, performing digital-to-analog conversion on the first valid signal includes: The communication device performs digital-to-analog conversion on the first valid signal by using a first digital-to-analog converter, where the first digital-to-analog converter is a digital-to-analog converter shared by the first signal transmission module and the noise transmission module. That the communication device performs digital-to-analog conversion on the first noise signal includes: The communication device performs digital-to-analog conversion on the first noise signal by using the first digital-to-analog converter.

In a possible implementation of this application, performing digital-to-analog conversion on the first valid signal includes: The communication device performs digital-to-analog conversion on the first valid signal by using a second digital-to-analog converter of the first signal transmission module. That the communication device performs digital-to-analog conversion on the first noise signal includes: The communication device performs digital-to-analog conversion on the first noise signal by using a third digital-to-analog converter of the noise transmission module.

In a possible implementation of this application, before transmitting the first valid signal to the first radio frequency processing module by using the first signal transmission module, the method further includes: The communication device transmits the first valid signal to a first intermediate frequency processing module by using the first signal transmission module. The communication device shifts, to a first carrier by using the first intermediate frequency processing module, the first valid signal filtered by using a first band-pass filter. Before the communication device transmits the first noise signal to the first radio frequency processing module by using the noise transmission module, the method further includes: The communication device transmits the first noise signal to the first intermediate frequency processing module by using the noise transmission module. The communication device shifts, to the first carrier by using the first intermediate frequency processing module, the first noise signal filtered by using a second band-pass filter.

In a possible implementation of this application, the communication device further includes a second signal transmission module, the second signal transmission module and the first signal transmission module share the noise transmission module, and the method further includes: The communication device transmits a second valid signal to a second radio frequency processing module by using the second signal transmission module. The communication device transmits a second noise signal to the second radio frequency processing module by using the noise transmission module, where the second noise signal is an out-of-band signal of the second valid signal. The communication device mixes the second valid signal and the second noise signal by using the second radio frequency processing module to obtain a second mixed signal.

In a possible implementation of this application, after mixing the second valid signal and the second noise signal by using the second radio frequency processing module to obtain the second mixed signal, the method further includes: amplifying the second mixed signal by using the second radio frequency processing module. The communication device filters out the second noise signal from the amplified second mixed signal by using the second radio frequency processing module to obtain a second to-be-sent signal.

In a possible implementation of this application, transmitting the second valid signal to the second radio frequency processing module by using the second signal transmission module, and transmitting the second noise signal to the second radio frequency processing module by using the noise transmission module include: The communication device performs digital-to-analog conversion and filtering on the second valid signal transmitted on the second signal transmission module, and then transmits the second valid signal to the second radio frequency processing module. The communication device performs digital-to-analog conversion and filtering on the second noise signal transmitted on the noise transmission module, and then transmits the second noise signal to the second radio frequency processing module.

In a possible implementation of this application, performing digital-to-analog conversion on the second valid signal transmitted on the second signal transmission module includes: The communication device performs digital-to-analog conversion on the second valid signal by using a fourth digital-to-analog converter. That the communication device performs digital-to-analog conversion on the second noise signal transmitted on the noise transmission module includes: The communication device performs digital-to-analog conversion on the second noise signal by using the fourth digital-to-analog converter, where the fourth digital-to-analog converter is a digital-to-analog converter shared by the second signal transmission module and the noise transmission module.

In a possible implementation of this application, performing digital-to-analog conversion on the second valid signal transmitted on the second signal transmission module further includes: The communication device performs digital-to-analog conversion on the second valid signal by using a fifth digital-to-analog converter of the second signal transmission module. The communication device performs digital-to-analog conversion on the first noise signal by using the third digital-to-analog converter of the noise transmission module.

In a possible implementation of this application, before transmitting the second valid signal to the second radio frequency processing module by using the second signal transmission module, and transmitting the second noise signal to the second radio frequency processing module by using the noise transmission module, the method further includes: The communication device transmits the second valid signal to a second intermediate frequency processing module by using the second signal transmission module. The communication device shifts, to the first carrier by using the second intermediate frequency processing module, the second valid signal filtered by using a third band-pass filter. The communication device transmits the second noise signal to the second intermediate frequency processing module by using the noise transmission module. The communication device shifts, to the first carrier, by using the second intermediate frequency processing module, the second noise signal filtered by using the second band-pass filter in the noise transmission module.

In a possible implementation of this application, the method further includes: The communication device transmits the second valid signal to the second radio frequency processing module by using the second signal transmission module, and transmits a third noise signal to the second radio frequency processing module by using the noise transmission module. The third noise signal includes the first noise signal and the second noise signal.

In a possible implementation of this application, either the first intermediate frequency processing module or the second intermediate frequency processing module includes a first frequency mixing unit and a filtering processing unit. The communication device shifts a target valid signal and a target noise signal to the first carrier by using the first frequency mixing unit, and further transmits the target valid signal and the target noise signal that are on the first carrier to the filtering processing unit. The communication device sends the target valid signal and the target noise signal to a target radio frequency processing module by using the filtering processing unit. The target valid signal is the first valid signal, and the target noise signal is the first noise signal. Alternatively, the target valid signal is the second valid signal, and the target noise signal is the second noise signal.

In a possible implementation of this application, the target radio frequency processing module includes a second frequency mixing unit, a combiner, a power amplifier, and a fourth band-pass filter, and the target radio frequency processing module is the first radio frequency processing module or the second radio frequency processing module. That the communication device mixes the target valid signal and the target noise signal by using the target radio frequency processing module to obtain a target mixed signal includes: The communication device shifts the target valid signal and the target noise signal to a second carrier by using the second frequency mixing unit. The communication device mixes the target valid signal and the target noise signal that are on the second carrier by using the combiner to obtain the target mixed signal. That the communication device filters out the target noise signal from the target mixed signal by using the target radio frequency processing module to obtain a target to-be-sent signal includes: The communication device filters out the target noise signal from the target mixed signal by using a fifth band-pass filter to obtain the target to-be-sent signal.

According to a second aspect, a communication apparatus is provided, including: a first signal transmission module, a noise transmission module corresponding to the first signal transmission module, and a first radio frequency processing module connected to the first signal transmission module and the noise transmission module. The first signal transmission module is configured to transmit a first valid signal to the first radio frequency processing module. The noise transmission module is configured to transmit a first noise signal corresponding to the first valid signal to the first radio frequency processing module, where the first noise signal is an out-of-band signal of the first valid signal. The first radio frequency processing module is configured to mix the first valid signal and the first noise signal to obtain a first mixed signal.

In a possible implementation of this application, the first radio frequency processing module is further configured to: amplify the first mixed signal, and filter out the first noise signal from the amplified first mixed signal to obtain a first to-be-sent signal.

In a possible implementation of this application, the first signal transmission module includes a first digital-to-analog converter and a first band-pass filter connected to the first digital-to-analog converter, and the noise transmission module includes a second band-pass filter connected to the first digital-to-analog converter.

In a possible implementation of this application, the first digital-to-analog converter is configured to: perform digital-to-analog conversion on the first valid signal, and then transmit the first valid signal to the first band-pass filter. The first band-pass filter is configured to: perform filtering processing on the first valid signal obtained through analog-to-digital conversion, and send the first valid signal to the first radio frequency processing module. The first digital-to-analog converter is further configured to: perform digital-to-analog conversion on the first noise signal, and then transmit the first noise signal to the second band-pass filter. The second band-pass filter is configured to: perform filtering processing on the first noise signal obtained through the digital-to-analog conversion by using the first digital-to-analog converter, and send the first noise signal to the first radio frequency processing module.

In a possible implementation of this application, the first signal transmission module includes a second digital-to-analog converter and a first band-pass filter connected to the second digital-to-analog converter, and the noise transmission module includes a third digital-to-analog converter and a second band-pass filter connected to the third digital-to-analog converter.

In a possible implementation of this application, the second digital-to-analog converter is configured to: perform digital-to-analog conversion on the first valid signal, and then transmit the first valid signal to the first band-pass filter. The first band-pass filter is configured to: perform filtering processing on the first valid signal obtained through analog-to-digital conversion, and send the first valid signal to the first radio frequency processing module. The third digital-to-analog converter is configured to: perform digital-to-analog conversion on the first noise signal, and then transmit the first noise signal to the second band-pass filter. The second band-pass filter is configured to: perform filtering processing on the first noise signal obtained through the digital-to-analog conversion by using the first digital-to-analog converter, and send the first noise signal to the first radio frequency processing module.

In a possible implementation of this application, the communication apparatus further includes a first intermediate frequency processing module. An input end of the first intermediate frequency processing module is connected to the first signal transmission module and the noise transmission module, and an output end of the first intermediate frequency processing module is connected to an input end of the first radio frequency processing module.

In a possible implementation of this application, the first intermediate frequency processing module is configured to: shift, to a first carrier, the first valid signal and the first noise signal that are input to the first intermediate frequency processing module, perform filtering processing on the first valid signal and the first noise signal, and then transmit the first valid signal and the first noise signal to the first radio frequency processing module.

In a possible implementation of this application, the communication apparatus further includes a second signal transmission module and a second radio frequency processing module connected to the second signal transmission module. The second signal transmission module and the first signal transmission module share the noise transmission module. The second signal transmission module is configured to transmit a second valid signal to the second radio frequency processing module by using the second signal transmission module. The noise transmission module is configured to transmit a second noise signal corresponding to the second valid signal to the second radio frequency processing module, where the second noise signal is an out-of-band signal of the second valid signal. The second radio frequency processing module is configured to mix the second valid signal and the second noise signal to obtain a second mixed signal.

In a possible implementation of this application, the communication apparatus further includes a second intermediate frequency processing module. An input end of the second intermediate frequency processing module is connected to the second signal transmission module and the noise transmission module, and an output end of the second intermediate frequency processing module is connected to an input end of the second radio frequency processing module.

In a possible implementation of this application, either the first intermediate frequency processing module or the second intermediate frequency processing module includes a first frequency mixing unit and a filtering processing unit. The first frequency mixing unit is configured to: shift a target valid signal and a target noise signal to the first carrier, and transmit the target valid signal and the target noise signal that are on the first carrier to the filtering processing unit. The filtering processing unit is configured to: perform filtering processing on the target valid signal and the target noise signal, and send the target valid signal and the target noise signal to the target radio frequency processing module. The target radio frequency processing module is the first radio frequency processing module or the second radio frequency processing module. The target valid signal is the first valid signal, and the target noise signal is the first noise signal; or the target valid signal is the second valid signal, and the target noise signal is the second noise signal.

In a possible implementation of this application, the target radio frequency processing module includes a second frequency mixing unit, a combiner, a power amplifier, and a fourth band-pass filter. The target radio frequency processing module is the first radio frequency processing module or the second radio frequency processing module. The second frequency mixing unit is configured to shift the target valid signal and the target noise signal to a second carrier. The combiner is configured to mix the target valid signal and the target noise signal to obtain a target mixed signal. The fourth band-pass filter is configured to filter out the target noise signal from the target mixed signal to obtain a target to-be-sent signal.

According to a third aspect, a wireless communication system is provided. The system includes the foregoing communication apparatus and receiving device, and the receiving device is configured to receive a signal from a signal transmission apparatus.

According to a fourth aspect, a computer-readable storage medium is provided, including computer instructions. When the computer instructions are run on a base station, the base station performs the foregoing signal transmission method.

According to a fifth aspect, a chip is provided. The chip includes a processor and a communication interface, the communication interface is coupled to the processor, and the processor is configured to run a computer program or instructions, to implement the foregoing signal transmission method. The communication interface is configured to communicate with a module other than the chip.

According to a sixth aspect, a base station includes at least one processor. The at least one processor is coupled to a memory, and the at least one processor is configured to run instructions stored in the memory to perform the foregoing signal transmission method.

In a possible implementation of this application, the base station may further include a transmitter, and the base station is configured to transmit a signal by using the transmitter.

In a possible implementation of this application, the base station may further include a receiver, and the base station is configured to receive a signal from another device by using the receiver.

In a possible implementation of this application, the receiver and the transmitter of the base station may be integrated together as a transceiver. This is not limited in embodiments of this application.

It may be understood that, for beneficial effects of the second aspect, the third aspect, the fourth aspect, the fifth aspect, and the sixth aspect, refer to related descriptions in the first aspect. Details are not described herein again.

### BRIEF DESCRIPTION OF DRAWINGS

FIG. 1 is a diagram of two reserved resource placement implementation solutions based on a discrete Fourier transform-spread-orthogonal frequency division multiplexing technology according to this application;
FIG. 2 is a signal diagram in which a reverse time domain signal and an actually sent data signal cancel each other in time domain according to this application;
FIG. 3 is a diagram of an architecture of a communication system according to an embodiment of this application;
FIG. 4 is a diagram of an architecture of a communication device according to an embodiment of this application;
FIG. 5 is a diagram of an architecture of a communication device in which a signal transmission module and a noise transmission module share a digital-to-analog converter according to an embodiment of this application;
FIG. 6 is a diagram of an architecture of a communication device in which a signal transmission module and a noise transmission module each have a digital-to-analog converter according to an embodiment of this application;
FIG. 7 is a diagram of an architecture of a communication device having an intermediate frequency processing module according to an embodiment of this application;
FIG. 8 is a diagram of an architecture of a communication device in which a signal transmission module and a noise transmission module share a digital-to-analog converter and that has an intermediate frequency processing module according to an embodiment of this application;
FIG. 9 is a diagram of an architecture of a communication device in which a signal transmission module and a noise transmission module each have a digital-to-analog converter and that has an intermediate frequency processing module according to an embodiment of this application;
FIG. 10 is a diagram of an architecture of a communication device in which two signal transmission modules correspond to one noise transmission module according to an embodiment of this application;
FIG. 11 is a diagram of an architecture of a communication device in which two signal transmission modules correspond to one noise transmission module and the noise transmission module shares a digital-to-analog converter with a signal transmission module according to an embodiment of this application;
FIG. 12 is a diagram of an architecture of another communication device in which two signal transmission modules correspond to one noise transmission module and the noise transmission module shares a digital-to-analog converter with a signal transmission module according to an embodiment of this application;
FIG. 13 is a diagram of an architecture of a communication device in which two signal transmission modules correspond to one noise transmission module and the two signal transmission modules and the noise transmission module each have a digital-to-analog converter according to an embodiment of this application;
FIG. 14 is a diagram of an architecture of a communication device that has an intermediate frequency processing module and in which two signal transmission modules correspond to one noise transmission module according to an embodiment of this application;
FIG. 15 is a diagram of an architecture of another communication device that has an intermediate frequency processing module and in which two signal transmission modules correspond to one noise transmission module according to an embodiment of this application;
FIG. 16 is a diagram of an architecture of a communication device in which a plurality of valid signals correspond to one noise signal according to an embodiment of this application;
FIG. 17 is a diagram of a structure of a radio frequency processing module according to an embodiment of this application;
FIG. 18 is a diagram of a structure of another radio frequency processing module according to an embodiment of this application;
FIG. 19 is a schematic flowchart of a signal transmission method according to an embodiment of this application;
FIG. 20 is a diagram of a structure of a communication device according to an embodiment of this application;
FIG. 21 is a diagram of a hardware structure of a communication device according to an embodiment of this application; and
FIG. 22 is a diagram of a structure of a chip according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first valid signal and a second valid signal are merely used to distinguish between different valid signals, and a sequence of the first valid signal and the second valid signal is not limited. A person skilled in the art may understand that the terms such as "first" and "second" do not limit a quantity or an execution sequence, and the terms such as "first" and "second" do not indicate a definite difference.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Before embodiments of this application are described, related terms in embodiments of this application are first explained as follows.
1. Peak-to-average power ratio (peak-to-average power ratio, PAPR) of a signal: A radio signal, observed in time domain, is a sine wave with a constantly changing amplitude. A peak amplitude of the signal in a periodicity is different from that in another periodicity. Therefore, average powers and peak powers in periodicities are different. In a period of time, the peak power is a maximum transient power that occurs at a specific probability. The probability is usually 0.01%. A ratio of the peak power at the probability to a total average power of a system is the peak-to-average power ratio of the signal.
2. Tone reservation (tone reservation, TR): A subcarrier is reserved specifically for the radio signal to reduce the peak-to-average power ratio.

Before embodiments of this application are described in detail, application scenarios of embodiments of this application are first described.

Currently, a 5th generation mobile communication technology (5th generation mobile communication technology, 5G) is a new generation broadband mobile communication technology that features a high rate, a low delay, and massive connections. In the future, 5G+ and even 6G have also started to develop. Millimeter-wave communication and terahertz communication with abundant frequency bands can meet a rate requirement in a communication technology. However, a high-frequency carrier has a problem of attenuation of wireless propagation. Currently, to resolve this problem, a quantity of antenna array elements or a transmit power of a signal is mainly increased. The increase of the transmit power of the signal also brings another problem, to be specific, a peak-to-average power ratio (peak-to-average power ratio, PAPR) of the signal is excessively high. As a result, signal distortion is caused, and consequently, a receiving end cannot parse the signal correctly.

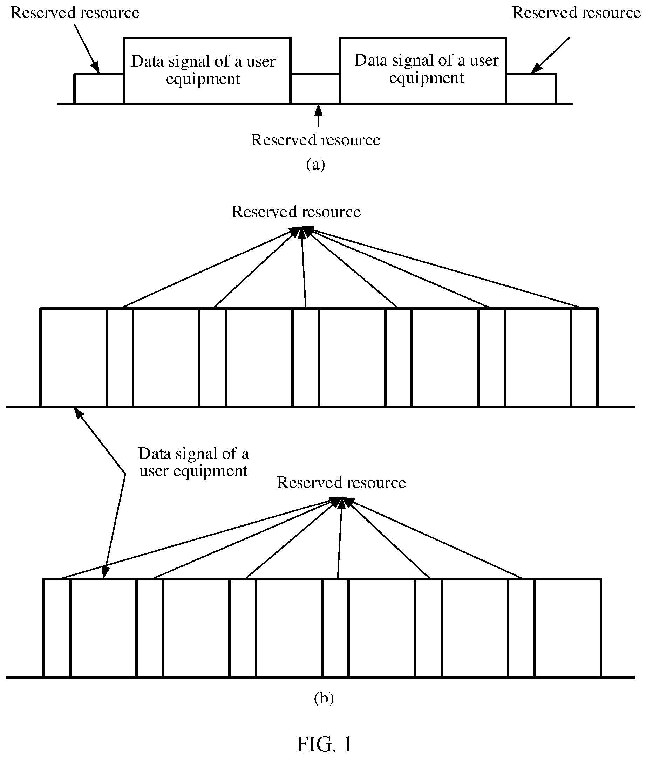

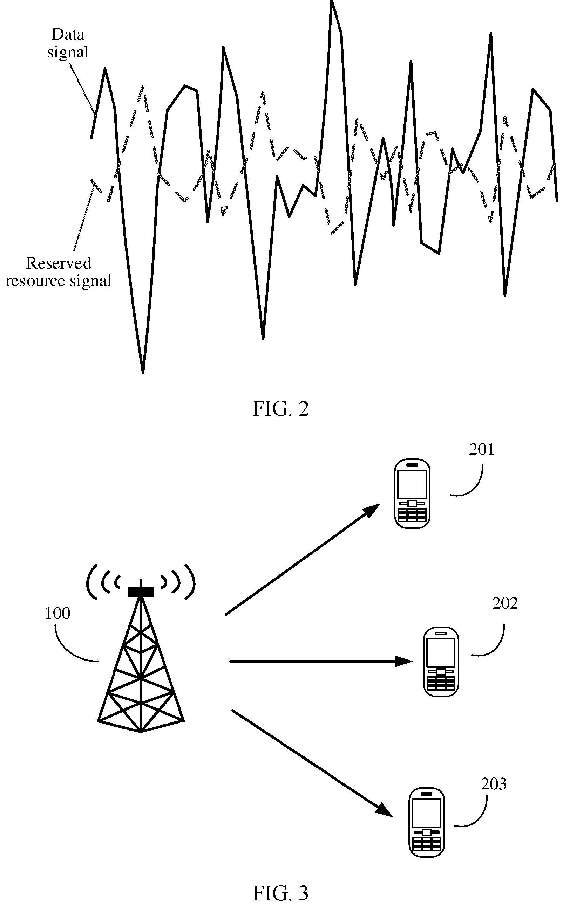

In a conventional technology, to resolve a problem that a PAPR of the high-frequency carrier is excessively high, a resource reservation solution, for example, a tone reservation (tone reservation, TR) solution, is proposed. These reserved resources are inserted into a data signal. A network device sends different reserved resources, placement locations of the reserved resources, and a data signal set to a terminal device. The terminal device demodulates data based on location information, to finally obtain the data signal. FIG. 1 is a diagram of two reserved resource placement implementation solutions based on a discrete Fourier transform-spread-orthogonal frequency division multiplexing (discrete Fourier transform-spread-orthogonal frequency division multiplexing, DFT-s-OFDM) technology. (a) in FIG. 1 shows a centralized placement solution. Data signals of two user equipments (user equipments, UEs) each have one reserved resource, and the two user equipments further share one reserved resource. (b) in FIG. 1 is a discrete placement solution. Reserved resources are inserted into data signals of one user equipment, including locations at which a plurality of reserved resources are placed. These reserved resources are generally frequency domain resources. When signals transmitted on these frequency domain resources are converted to be in time domain, time domain signals are reverse signals of peak signals during transmission of original data signals. As shown in FIG. 2, these reverse time domain signals and actually sent data signals cancel each other in time domain. In this way, a PAPR of a sent data signal can be reduced. However, in this method, a location of a reserved resource needs to be configured for a data signal. This wastes a frequency domain resource of the data signal and reduces spectral efficiency.

Therefore, this application proposes a signal transmission method, a communication apparatus, and a wireless communication system, so that when a resource reservation method is used, a frequency domain resource is not occupied, frequency efficiency is improved, and a PAPR is reduced.

FIG. 3 is a diagram of an architecture of a wireless communication system according to an embodiment of this application. The communication system includes a sending device 100 and one or more receiving devices (for example, a receiving device 201, a receiving device 202, and a receiving device 203).

The sending device 100 may be a base station (base station, BS) device. The base station device may also be referred to as a base station, and is an apparatus deployed in a radio access network and configured to provide a wireless communication function. For example, a device that provides a base station function in a 2G network includes a base transceiver station (base transceiver station, BTS) and a base station controller (base station controller, BSC). A device that provides a base station function in a 3G network includes a NodeB (NodeB) and a radio network controller (radio network controller, RNC). A device that provides a base station function in a 4G network includes an evolved NodeB (evolved NodeB, eNB). A device that provides a base station function in a 5G network includes a new radio NodeB (new radio NodeB, gNB), a central unit (central Unit, CU), a distributed unit (distributed Unit), and a new radio controller. Certainly, the sending device 100 may alternatively be a relay device or a base station device in the internet of vehicles. This is not limited in this embodiment of this application.

The receiving device may be a base station, a terminal, or a vehicle in the internet of vehicles. The terminal is a device having a wireless transceiver function, may be deployed on land, and includes an indoor device, an outdoor device, a hand-held device, or a vehicle-mounted device. The terminal may also be deployed on water (for example, on a ship), and may also be deployed in air (for example, in aircraft, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

It should be noted that, in FIG. 3, an example in which the sending device 100 is a base station and the receiving device 201 to the receiving device 203 are mobile phones is used.

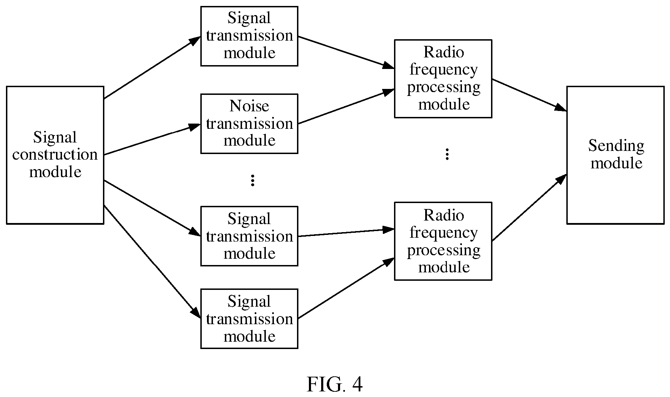

FIG. 4 is a diagram of an architecture of a communication device according to an embodiment of this application. The communication device may be the foregoing sending device 100 or a signal transmission apparatus used in the sending device 100. The communication device includes one or more signal transmission modules, one or more noise transmission modules, and one or more radio frequency processing modules.

The signal transmission module is configured to transmit a valid signal. The noise transmission module is configured to transmit a noise signal corresponding to the valid signal. The radio frequency processing module is configured to: shift the valid signal and the noise signal to a transmit carrier of the sending device 100, and perform combination, amplification, and filtering processing on the valid signal and the noise signal corresponding to the valid signal to obtain a final to-be-sent signal.

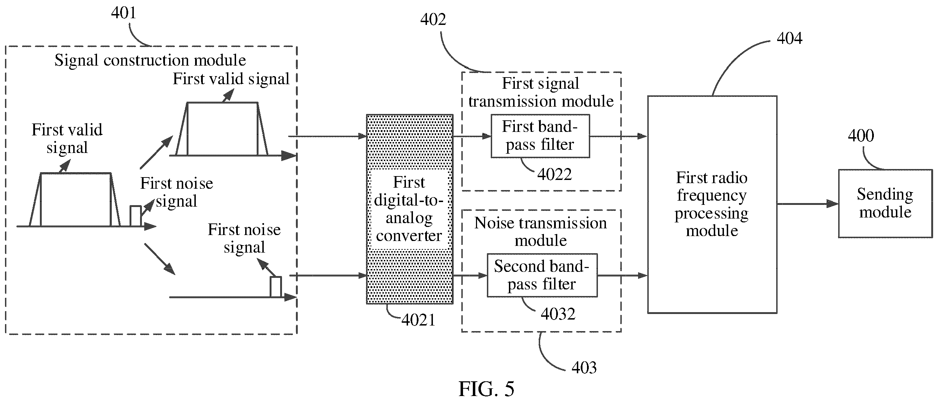

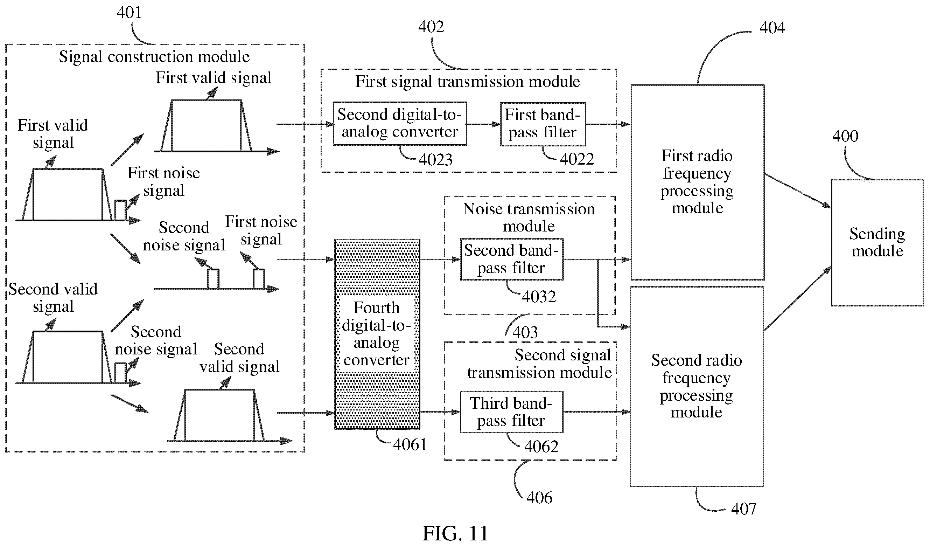

In this embodiment of this application, each of the one or more signal transmission modules may correspond to one noise transmission module. For example, in communication devices shown in FIG. 5 to FIG. 10, each signal transmission module corresponds to one noise module. Certainly, in this embodiment of this application, a plurality of signal transmission modules may share one noise transmission module. For example, in signal transmission apparatuses shown in FIG. 11 to FIG. 18, an example in which a plurality of signal transmission modules correspond to one noise transmission module is used. Certainly, in this embodiment of this application, the plurality of signal transmission modules may correspond to a plurality of noise transmission modules. For example, the communication device is three signal transmission modules and two noise transmission modules. Two signal transmission modules share one noise transmission module, and the other signal transmission module corresponds to the other noise transmission module. For another example, the communication device includes five signal transmission modules and two noise transmission modules. Two signal transmission modules jointly correspond to one noise transmission module, and the other three signal transmission modules jointly correspond to and share the other noise transmission module.

In a possible embodiment of this application, as shown in FIG. 4, the communication device may further include a signal construction module. The signal construction module is configured to generate or construct one or more to-be-transmitted signals. The to-be-transmitted signals include one or more valid signals and one or more noise signals. The noise signal is an out-of-band signal of the valid signal. The signal construction module is connected to the signal transmission module and the noise transmission module. The signal construction module is configured to: transmit the valid signal to the signal transmission module, and transmit the noise signal corresponding to the valid signal to the noise transmission module corresponding to the signal transmission module.

In an example, the signal construction module constructs one to-be-transmitted signal, where the to-be-transmitted signal includes one valid signal and a noise signal out of a band of the valid signal.

In another example, the signal construction module constructs one to-be-transmitted signal, where the to-be-transmitted signal includes two valid signals: a valid signal A and a valid signal B, and includes a noise signal A out of a band of the valid signal A and a noise signal B out of a band of the valid signal B.

In another example, the signal construction module constructs two to-be-transmitted signals: a to-be-transmitted signal 1 and a to-be-transmitted signal 2. The to-be-transmitted signal 1 includes a valid signal A and a noise signal A, and the to-be-transmitted signal 2 includes a valid signal B and a noise signal B.

The out-of-band signal of the valid signal represents a signal out of a frequency band of the valid signal. In a conventional technology, adding a reserved subcarrier resource to the valid signal is adding the reserved subcarrier resource in the frequency band of the valid signal, and a frequency band location of the valid signal needs to be occupied. In this embodiment of this application, the noise signal is constructed out of the frequency band of the valid signal as the reserved subcarrier resource. For example, a frequency band of a to-be-transmitted signal is 200 MHz, and the to-be-transmitted signal includes a valid signal of 170 MHz and a reserved subcarrier signal of 30 MHz. In this embodiment of this application, the to-be-transmitted signal includes a valid signal of 200 MHz, and a noise signal of 30 Hz is constructed out of a frequency band of the valid signal.

In a possible embodiment of this application, as shown in FIG. 4, the communication device may further include a sending module. The sending module is connected to the one or more radio frequency processing modules, and the sending module is configured to send out the to-be-sent signal obtained by the radio frequency processing module. For example, the sending module may be an antenna or a transmitter.

In the following embodiments, an example in which a communication device constructs one to-be-transmitted signal, where the to-be-transmitted signal includes at least one valid signal and a noise signal out of a band of the valid signal is used.

Case 1: Each signal transmission module corresponds to one noise transmission module.

FIG. 5 is a diagram of an architecture of a communication device according to an embodiment of this application. The apparatus includes a first signal transmission module 402, a noise transmission module 403 corresponding to the first signal transmission module 402, and a first radio frequency processing module 404 connected to the first signal transmission module 402 and the noise transmission module 403.

The first signal transmission module 402 is configured to transmit a first valid signal to the first radio frequency processing module 404. The noise transmission module 403 is configured to transmit a first noise signal corresponding to the first valid signal to the first radio frequency processing module 404, where the first noise signal is an out-of-band signal of the first valid signal. The first radio frequency processing module 404 is configured to mix the first valid signal and the first noise signal to obtain a first mixed signal.

In a possible implementation of this application, the first radio frequency processing module 404 is further configured to: amplify the first mixed signal, and filter out the first noise signal from the amplified first mixed signal to obtain a first to-be-sent signal. After the first valid signal and the first noise signal are combined, the first radio frequency processing module 404 amplifies a combined signal to enhance a signal transmission capability. Because the first mixed signal further includes the first noise signal, the first noise signal is filtered out by using a band-pass filter to obtain the first to-be-sent signal, and the first to-be-sent signal is sent out by a sending device (for example, an antenna or a transmitter).

FIG. 5 is a diagram of an architecture of a communication device according to an embodiment of this application. In FIG. 5, an example in which the communication device has one signal transmission module (namely, the first signal transmission module 402), and the first signal transmission module 402 corresponds to one noise transmission module 403 is used. The first signal transmission module 402 and the noise transmission module 403 share a same digital-to-analog converter, for example, a first digital-to-analog converter 4021.

As shown in FIG. 5, the first signal transmission module 402 includes a first band-pass filter 4022 connected to the first digital-to-analog converter 4021. The noise transmission module 403 includes a second band-pass filter 4032 connected to the first digital-to-analog converter 4021.

It may be understood that outputs of the first band-pass filter 4022 and the second band-pass filter 4032 are connected to the first radio frequency processing module 404 or a first intermediate frequency processing module 405. This is not limited in this embodiment of this application.

It may be understood that the first digital-to-analog converter 4021 may belong to the first signal transmission module 402 or may belong to the noise transmission module 403. Certainly, the first digital-to-analog converter 4021 may alternatively be a device independent of the first signal transmission module 402 and the noise transmission module 403. This is not limited in this embodiment of this application.

It may be understood that the first digital-to-analog converter 4021 is connected to the signal construction module 401 shown in FIG. 4, and is configured to obtain the first valid signal and the first noise signal that are output by the signal construction module 401.

In an example, the first digital-to-analog converter 4021 is configured to: perform digital-to-analog conversion on the first valid signal, and then transmit the first valid signal to the first band-pass filter 4022. The first band-pass filter 4022 is configured to: filter out a signal other than the first valid signal obtained through the digital-to-analog conversion, and send, to the first radio frequency processing module 404, the first valid signal obtained through the digital-to-analog conversion.

In an example, the first digital-to-analog converter 4021 is further configured to: perform digital-to-analog conversion on the first noise signal, and then transmit the first noise signal to the second band-pass filter 4032. The second band-pass filter 4032 is configured to: perform filtering processing on the first noise signal obtained through the digital-to-analog conversion by using the first digital-to-analog converter 4021, and send the first noise signal to the first radio frequency processing module 404.

In this embodiment of this application, the first valid signal and the first noise signal out of a band of the first valid signal that are constructed in the signal construction module 401 are both digital signals. During transmission, the first digital-to-analog converter 4021 converts the first valid signal and the first noise signal from the digital signals to analog signals.

A sampling rate of the first digital-to-analog converter 4021 meets bandwidths of the first valid signal and the first noise signal. For example, if the bandwidth of the first valid signal is 200 MHz, and the bandwidth of the first noise signal is 30 MHz, the sampling rate of the first digital-to-analog converter 4021 is greater than 230 MHz.

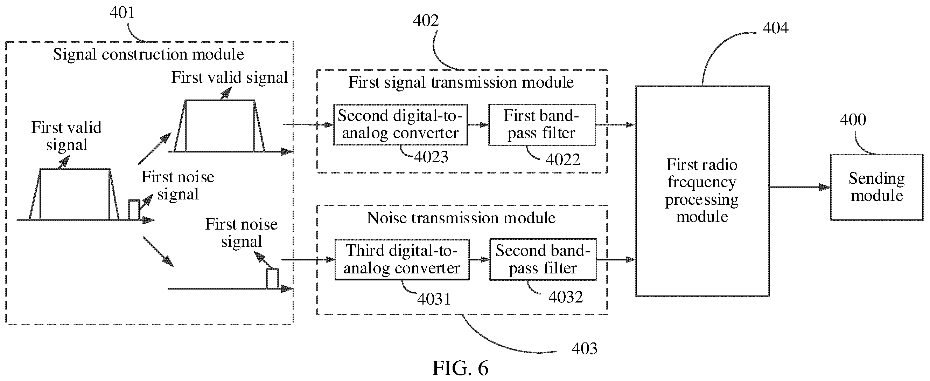

FIG. 6 is a diagram of an architecture of another communication device according to an embodiment of this application. A difference between the architecture shown in FIG. 6 and the architecture shown in FIG. 5 lies in that the first signal transmission module 402 and the noise transmission module 403 in FIG. 5 share one digital-to-analog converter, but in a solution shown in FIG. 6, a first signal transmission module 402 and a noise transmission module 403 each have one digital-to-analog converter independently.

Specifically, as shown in FIG. 6, the first signal transmission module 402 includes a second digital-to-analog converter 4023 and a first band-pass filter 4022 connected to the second digital-to-analog converter 4023. The noise transmission module 403 includes a third digital-to-analog converter 4031 and a second band-pass filter 4032 connected to the third digital-to-analog converter 4031.

In an example, the second digital-to-analog converter 4023 is configured to: perform digital-to-analog conversion on a first valid signal, and then transmit the first valid signal to the first band-pass filter 4022. The first band-pass filter 4022 is configured to: perform filtering processing on the first valid signal obtained through the digital-to-analog conversion, and send the first valid signal to a first radio frequency processing module 404.

In an example, the third digital-to-analog converter 4031 is configured to: perform digital-to-analog conversion on a first noise signal, and then transmit the first noise signal to the second band-pass filter 4032. The second band-pass filter 4032 is configured to: perform filtering processing on the first noise signal obtained through the digital-to-analog conversion by using the second digital-to-analog converter 4023, and send the first noise signal to the first radio frequency processing module 404.

A sampling rate of the second digital-to-analog converter 4023 needs to be greater than a bandwidth of the first valid signal. A sampling rate of the third digital-to-analog converter 4031 needs to meet a bandwidth of the first noise signal. For example, the sampling rate of the second digital-to-analog converter 4023 may be twice the bandwidth of the first valid signal.

It may be understood that, in the architecture shown in FIG. 6, inputs of the second digital-to-analog converter 4023 and the third digital-to-analog converter 4031 are both connected to an output of a signal construction module 401, and the second digital-to-analog converter 4023 is configured to obtain the first valid signal from the signal construction module 401. The third digital-to-analog converter 4031 is configured to obtain the first noise signal from the signal construction module 401.

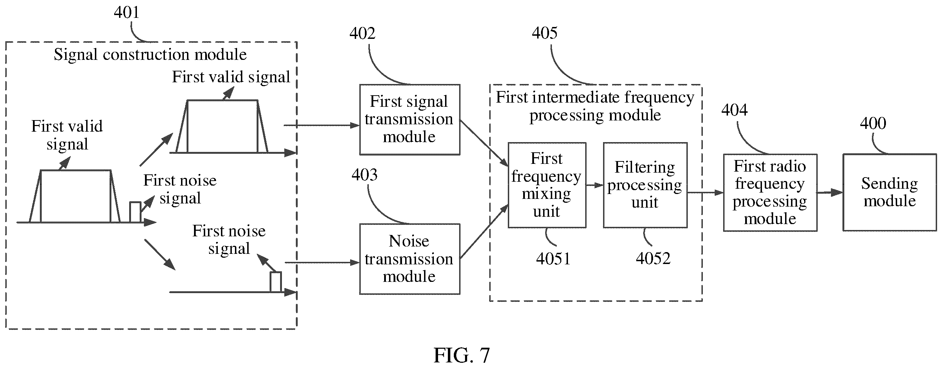

FIG. 7 is a diagram of an architecture of still another communication device according to an embodiment of this application. A difference between FIG. 7 and FIG. 4 lies in that the signal transmission apparatus provided in this embodiment of this application may further include a first intermediate frequency processing module 405. An input end of the first intermediate frequency processing module 405 is connected to output ends of a noise transmission module 403 and a first signal transmission module 402. In addition, an output end of the first intermediate frequency processing module 405 is connected to an input end of a first radio frequency processing module 404.

The first intermediate frequency processing module 405 is configured to: shift, to a first carrier, a target signal input to the first intermediate frequency processing module, perform filtering processing on the target signal that is on the first carrier, and then transmit the target signal to the first radio frequency processing module 404.

In an example, the target signal includes a first noise signal transmitted by using the noise transmission module 403 and a first valid signal transmitted by using the first signal transmission module 402.

In an example, the first carrier may be an intermediate frequency carrier, for example, between 150 Hz and 500 Hz.

Optionally, as shown in FIG. 7, the first intermediate frequency processing module 405 includes a first frequency mixing unit 4051 and a filtering processing unit 4052 connected to the first frequency mixing unit 4051. An input end of the first frequency mixing unit 4051 is connected to output ends of the first signal transmission module 402 and the noise transmission module 403. An output end of the first frequency mixing unit 4051 is connected to an input end of the filtering processing unit 4052. An output end of the filtering processing unit 4052 is connected to an input end of the first radio frequency processing module 404.

The first frequency mixing unit 4051 is configured to: shift, to the first carrier, the target signal input to the first intermediate frequency processing module 405, and send the target signal that is on the first carrier to the filtering processing unit 4052. The filtering processing unit 4052 is configured to: perform filtering processing on the target signal input to the filtering processing unit 4052, and send the target signal to the first radio frequency processing module 404.

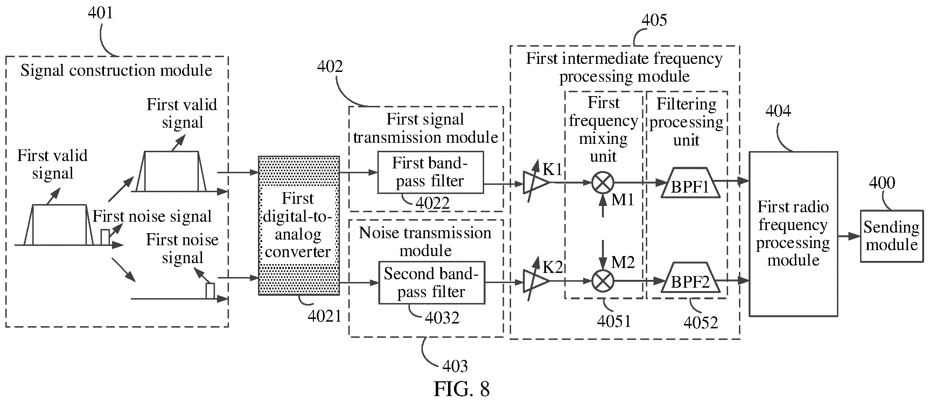

FIG. 8 is a diagram of an architecture of a communication device having a first intermediate frequency processing module. A difference between FIG. 8 and FIG. 5 lies in that, in comparison with the architecture shown in FIG. 5, in the architecture shown in FIG. 8, the communication device further includes the first intermediate frequency processing module 405, and each first signal transmission module 402 and each noise transmission module 403 in FIG. 8 and FIG. 5 share a first digital-to-analog converter 4021. Therefore, based on the structure shown in FIG. 5, the first signal transmission module 402 and the noise transmission module 403 are connected to a first radio frequency processing module 404 by using the first intermediate frequency processing module 405. The first intermediate frequency processing module 405 is configured to: shift, to a first carrier, a target signal transmitted by using the first signal transmission module 402 or the noise transmission module 403, and then output the target signal to the first radio frequency processing module 404.

Specifically, as shown in FIG. 8, an input of the first intermediate frequency processing module 405 is separately connected to a first band-pass filter 4022 and a second band-pass filter 4032. An output of the first intermediate frequency processing module 405 is connected to the first radio frequency processing module 404.

Optionally, as shown in FIG. 8, a first frequency mixing unit 4051 may include a frequency mixer M1 and a frequency mixer M2. An output end of the first band-pass filter 4022 is connected to the frequency mixer M1. The frequency mixer M1 is configured to shift a first valid signal to an intermediate frequency carrier (corresponding to the first carrier). An output end of the second band-pass filter 4032 is connected to the frequency mixer M2. The frequency mixer M2 is configured to shift a first noise signal to the intermediate frequency carrier (corresponding to the first carrier).

Optionally, as shown in FIG. 8, a filtering processing unit 4052 may include a band-pass filter BPF1 and a band-pass filter BPF2. An input end of the band-pass filter BPF1 is connected to an output end of the frequency mixer M1, and an output end of the band-pass filter BPF1 is connected to the first radio frequency processing module 404. The band-pass filter BPF1 is configured to: filter out a signal other than the first valid signal, and send the first valid signal to the first radio frequency processing module 404. An input end of the band-pass filter BPF2 is connected to an output end of the frequency mixer M2, and an output end of the band-pass filter BPF2 is connected to the first radio frequency processing module 404. The band-pass filter BPF2 is configured to: filter out a signal other than the first noise signal, and send the first noise signal to the first radio frequency processing module 404.

The frequency mixer M1 is further configured to transmit the first valid signal that is on the intermediate frequency carrier to the band-pass filter BPF1. The frequency mixer M2 is further configured to transmit the first noise signal that is on the intermediate frequency carrier to the band-pass filter BPF2.

Optionally, the architecture shown in FIG. 8 may further include a tunable amplifier K1 and a tunable amplifier K2. An input end of the tunable amplifier K1 is connected to the output end of the first band-pass filter 4022, and an output end of the tunable amplifier K1 is connected to an input end of the frequency mixer M1. An input end of the tunable amplifier K2 is connected to the output end of the second band-pass filter 4032, and an output end of the tunable amplifier K2 is connected to an input end of the frequency mixer M2.

In an example, K1 and K2 may belong to the first intermediate frequency processing module 405, or may be devices disposed independently of the first intermediate frequency processing module 405. This is not limited in this embodiment of this application.

It should be noted that, before the first intermediate frequency processing module 405 processes the target signal, the tunable amplifier K1 and the tunable amplifier K2 amplify the target signal, so that the target signal originally located in a baseband is amplified, and the target signal shifted to the intermediate frequency carrier is more stable.

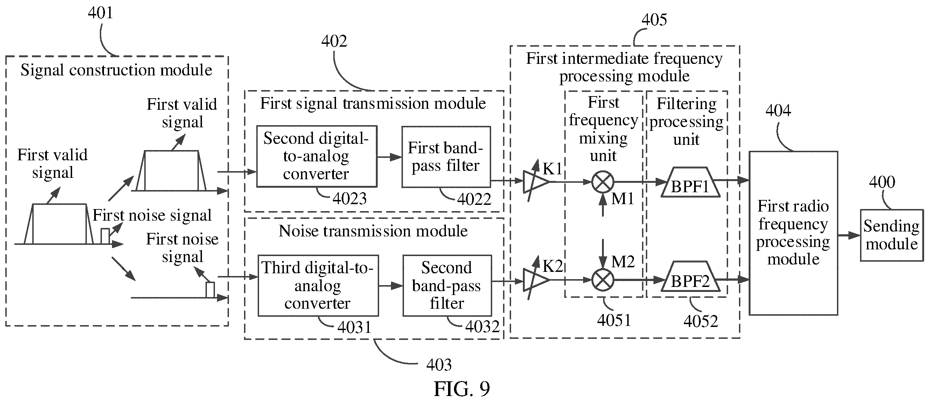

FIG. 9 is a diagram of an architecture of a communication device having a first intermediate frequency processing module. A difference between FIG. 9 and FIG. 6 lies in that, in comparison with the architecture shown in FIG. 6, in the architecture shown in FIG. 9, the communication device further includes the first intermediate frequency processing module 405. Each first signal transmission module 402 and each noise transmission module 403 in FIG. 9 and FIG. 6 have digital-to-analog converters independently. Specifically, the first signal transmission module 402 includes a second digital-to-analog converter 4023, and the noise transmission module 403 includes a third digital-to-analog converter 4031.

Specifically, the first intermediate frequency processing module 405 in FIG. 9 is the same as the first intermediate frequency processing module 405 in FIG. 8. Details are not described herein again.

Optionally, as shown in FIG. 9, the first intermediate frequency processing module 405 further includes a tunable amplifier K1 and a tunable amplifier K2.

The tunable amplifier may be understood as amplifying a first valid signal or a first noise signal, or not amplifying the first valid signal or the first noise signal, that is, the tunable amplifier may or may not have a signal amplification function. This is determined based on an actual situation, and is not limited herein.

Optionally, the tunable amplifier K1 and the tunable amplifier K2 may be connected to a processing device, and the processing device sets amplification multiples of the tunable amplifier K1 and the tunable amplifier K2. For example, that the amplification multiple is 1 may be understood as not amplifying a signal.

Case 2: A plurality of signal transmission modules correspond to one noise transmission module.

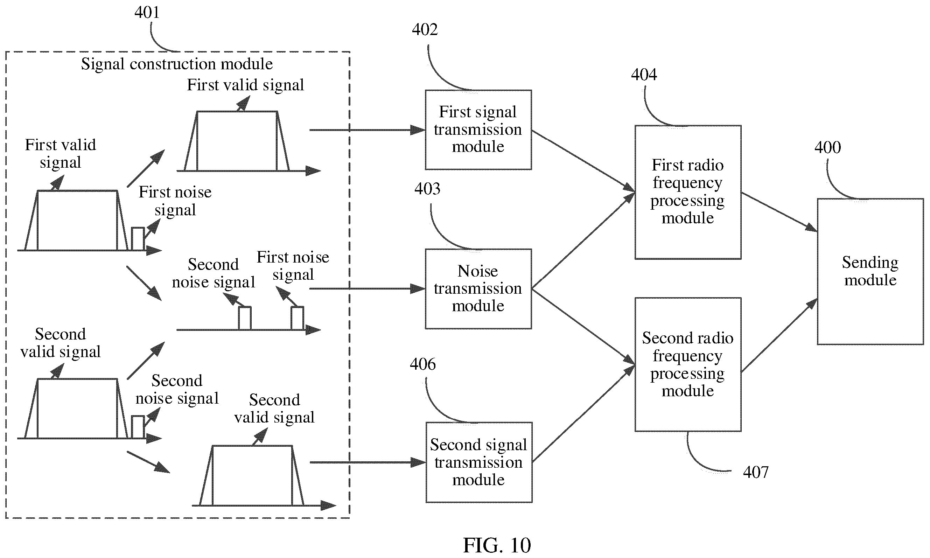

FIG. 10 is a diagram of an architecture of a communication device according to an embodiment of this application. In this embodiment, an example in which two signal transmission modules correspond to one noise transmission module is used. The communication device includes: a first signal transmission module 402, a noise transmission module 403, a first radio frequency processing module 404, a second signal transmission module 406, and a second radio frequency processing module 407 connected to the second signal transmission module 406. The second signal transmission module 406 and the first signal transmission module 402 share the noise transmission module 403.

The second signal transmission module 406 is configured to transmit a second valid signal to the second radio frequency processing module 407 by using the second signal transmission module 406, and the noise transmission module 403 is configured to transmit a second noise signal to the second radio frequency processing module 407, where the second noise signal is an out-of-band signal of the second valid signal. The second radio frequency processing module 407 is configured to mix the second valid signal and the second noise signal to obtain a second mixed signal.

In an embodiment of this application, the second radio frequency processing module 407 is further configured to filter the second noise signal in the second mixed signal to obtain a second to-be-sent signal. The second to-be-sent signal is sent out by a sending module 400 (for example, an antenna or a transmitter).

FIG. 11 is a diagram of an architecture of a communication device according to an embodiment of this application. In FIG. 11, an example in which a signal transmission apparatus has two signal transmission modules (that is, a first signal transmission module 402 and a second signal transmission module 406), and the first signal transmission module 402 and the second signal transmission module 406 share a noise transmission module 403 is used.

As shown in FIG. 11, the first signal transmission module 402 includes a second digital-to-analog converter 4023 and a first band-pass filter 4022. The second signal transmission module 406 includes a third band-pass filter 4062 connected to a fourth digital-to-analog converter 4061. The noise transmission module 403 includes a second band-pass filter 4032 connected to the fourth digital-to-analog converter 4061.

It may be understood that a first valid signal and a first noise signal that are output by the first band-pass filter 4022 and the second band-pass filter 4032 are transmitted to a first radio frequency processing module 404 or a first intermediate frequency processing module 405. This is not limited in this embodiment of this application. A second valid signal and a second noise signal that are output by the second band-pass filter 4032 and the third band-pass filter 4062 are transmitted to a second radio frequency processing module 407 or a second intermediate frequency processing module 408. This is not limited in this embodiment of this application.

It may be understood that, the second digital-to-analog converter 4023 and the fourth digital-to-analog converter 4061 are connected to a signal construction module 401, and are configured to obtain the first valid signal, the second valid signal, the first noise signal, and the second noise signal that are output by the signal construction module 401.

In an example, the fourth digital-to-analog converter 4061 is configured to perform digital-to-analog conversion on the second valid signal, and then transmit the second valid signal to the third band-pass filter 4062. The third band-pass filter 4062 is configured to: filter out a signal other than the second valid signal obtained through the digital-to-analog conversion, and send, to the second radio frequency processing module 407, the second valid signal obtained through the digital-to-analog conversion.

In an example, the fourth digital-to-analog converter 4061 is further configured to: perform digital-to-analog conversion on the second noise signal, and then transmit the second noise signal to the second band-pass filter 4032. The second band-pass filter 4032 is configured to: perform filtering processing on the second noise signal obtained through the digital-to-analog conversion by using the fourth digital-to-analog converter 4061, and send the second noise signal to the second radio frequency processing module 407.

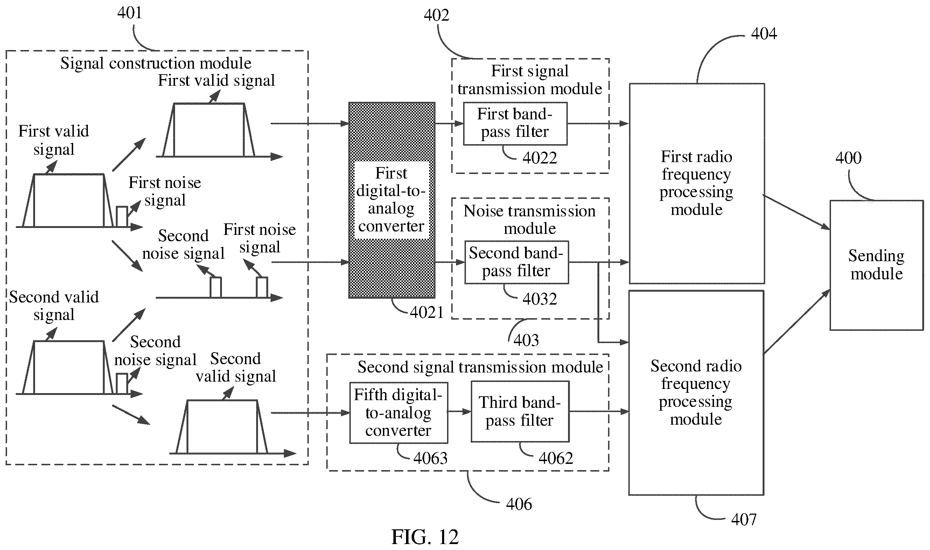

It may be understood that the noise transmission module 403 may share a digital-to-analog converter with any signal transmission module. In another possible implementation, as shown in FIG. 12, the noise transmission module 403 and the first signal transmission module 402 share a first digital-to-analog converter 4021, and the second signal transmission module 406 includes a fifth digital-to-analog converter 4063. The first valid signal and the first noise signal are converted by using the first digital-to-analog converter 4021 and respectively transmitted to the first band-pass filter 4022 and the second band-pass filter 4032. The second valid signal is converted by using the fifth digital-to-analog converter 4063 and transmitted to the third band-pass filter 4062. The second noise signal is converted by using the first digital-to-analog converter 4021 and transmitted to the second band-pass filter 4032.

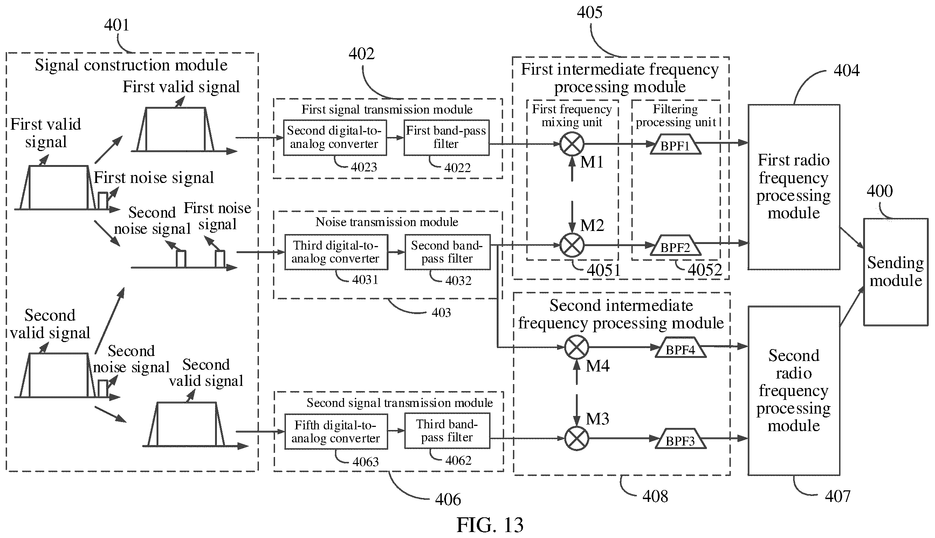

It may be understood that each of one noise transmission module and a plurality of signal transmission modules may use one digital-to-analog converter independently. For example, as shown in FIG. 13, a noise transmission module 403 uses a third digital-to-analog converter 4031, a first signal transmission module 402 uses a second digital-to-analog converter 4023, and a second signal transmission module 406 uses a fifth digital-to-analog converter 4063.

FIG. 13 is a diagram of a structure of another communication device according to an embodiment of this application. A difference between FIG. 13 and FIG. 10 lies in that the communication device provided in this embodiment of this application may further include a first intermediate frequency processing module 405 and a second intermediate frequency processing module 408. An input end of the second intermediate frequency processing module 408 is connected to output ends of the noise transmission module 403 and the second signal transmission module 406. In addition, an output end of the second intermediate frequency processing module 408 is connected to an input end of a second radio frequency processing module 404.

The second intermediate frequency processing module 408 is configured to: shift, to a first carrier, a target signal input to the second intermediate frequency processing module 408, perform filtering processing on the target signal that is on the first carrier, and then transmit the target signal to the second radio frequency processing module 407.

In an example, the target signal includes a second noise signal transmitted by using the noise transmission module 403 and a second valid signal transmitted by using the second signal transmission module 406.

A structure of the second intermediate frequency processing module 408 is the same as a structure of the first intermediate frequency processing module 405.

Optionally, as shown in FIG. 13, the second intermediate frequency processing module 408 includes a frequency mixer M3 and a frequency mixer M4. An output end of a third band-pass filter 4062 is connected to the frequency mixer M3. The frequency mixer M3 is configured to shift the second valid signal to an intermediate frequency carrier (corresponding to the first carrier). An output end of a second band-pass filter 4032 is further connected to the frequency mixer M4. The frequency mixer M4 is configured to shift the second noise signal to the intermediate frequency carrier (corresponding to the first carrier).

Optionally, as shown in FIG. 13, the second intermediate frequency processing module 408 may include a band-pass filter BPF3 and a band-pass filter BPF4. An input end of the band-pass filter BPF3 is connected to an output end of the frequency mixer M3, and an output end of the band-pass filter BPF3 is connected to the second radio frequency processing module 407. The band-pass filter BPF3 is configured to: filter out a signal other than the second valid signal, and send the second valid signal to the second radio frequency processing module 407. An input end of the band-pass filter BPF4 is connected to an output end of the frequency mixer M4, and an output end of the band-pass filter BPF4 is connected to the second radio frequency processing module 407. The band-pass filter BPF4 is configured to: filter out a signal other than the second noise signal, and send the second noise signal to the second radio frequency processing module 407.

The frequency mixer M3 is further configured to transmit the second valid signal that is on the intermediate frequency carrier to the band-pass filter BPF3. The frequency mixer M4 is further configured to transmit the second noise signal that is on the intermediate frequency carrier to the band-pass filter BPF4.

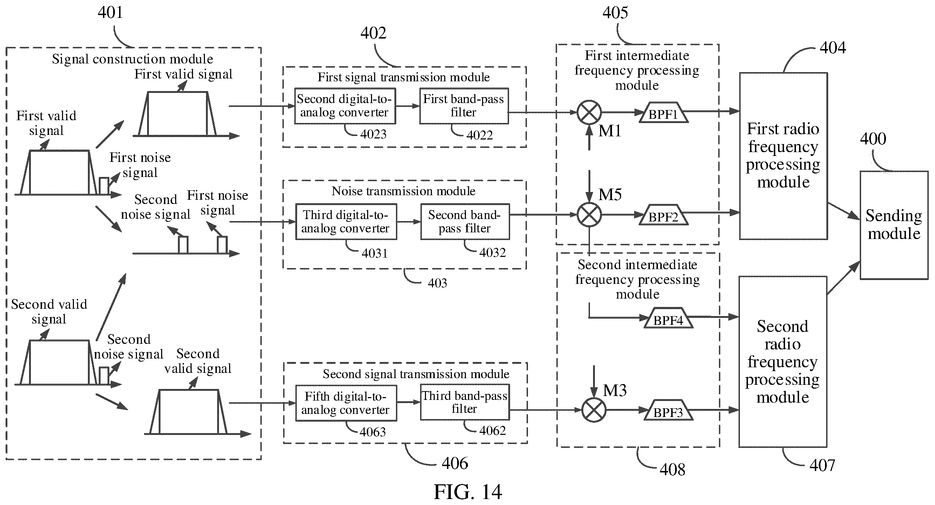

Optionally, a frequency mixer M2 in the first intermediate frequency processing module 405 and the frequency mixer M4 in the second intermediate frequency processing module 408 may be combined into one frequency mixer M5, as shown in FIG. 14. The frequency mixer M5 has two output ends, where a first output end is connected to a band-pass filter BPF2, and a second output end is connected to the band-pass filter BPF4.

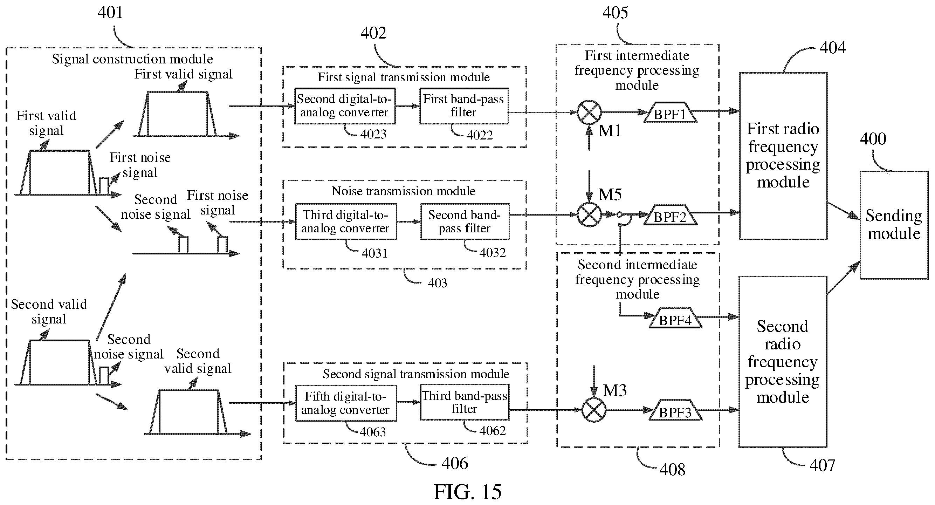

Optionally, the frequency mixer M5 has one output end, and the output end is connected to a switch device, as shown in FIG. 15. The switch device may select the output end of the frequency mixer M5 to be connected to the band-pass filter BPF2 or the band-pass filter BPF4.

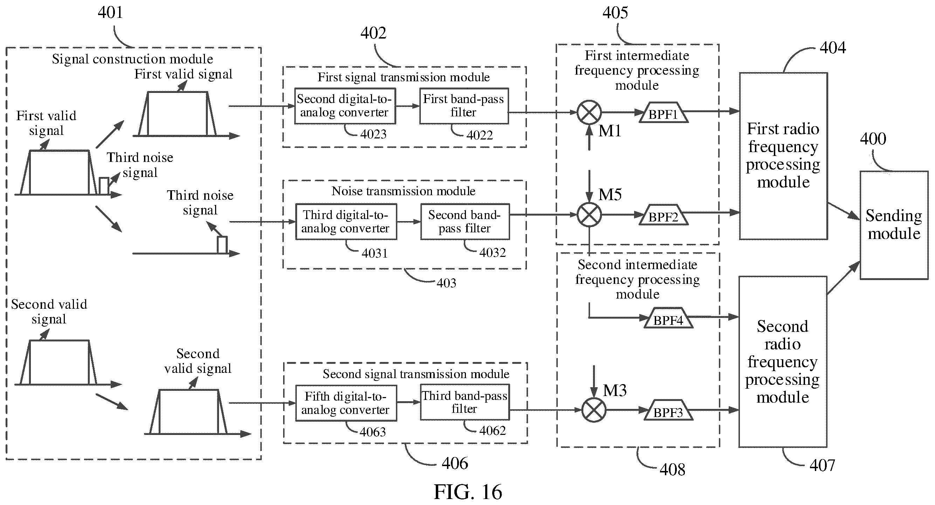

In a possible implementation of this application, to-be-transmitted signals include a first valid signal, the second valid signal, and a third noise signal. The third noise signal includes a first noise signal corresponding to the first valid signal and the second noise signal corresponding to the second valid signal. As shown in FIG. 16, the third noise signal is transmitted to the frequency mixer M5 by using the third digital-to-analog converter 4031 and the second band-pass filter 4032. The frequency mixer M5 shifts the third noise signal to an intermediate frequency, and transmits the third noise signal to the band-pass filter BPF2 and the band-pass filter BPF4. The band-pass filter BPF2 filters out the second noise signal from the third noise signal, and transmits the first noise signal to a first radio frequency processing module 404. The band-pass filter BPF4 filters out the first noise signal from the third noise signal, and transmits the second noise signal to the second radio frequency processing module 407.

In an embodiment of this application, a target radio frequency processing module includes a second frequency mixing unit, a combiner, a power amplifier, and a fourth band-pass filter. The target radio frequency processing module is any radio frequency processing module. The second frequency mixing unit is configured to shift a target valid signal and a target noise signal to a second carrier. The combiner is configured to mix the target valid signal and the target noise signal to obtain a target mixed signal. The fourth band-pass filter is configured to filter out the target noise signal from the target mixed signal to obtain a target to-be-sent signal. The target valid signal is any valid signal, and the target noise signal is any noise signal.

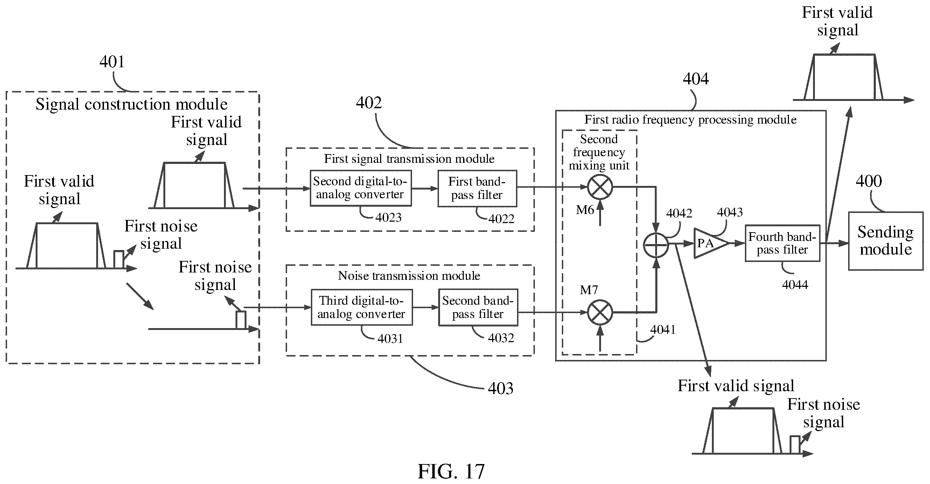

In a possible implementation of this application, as shown in FIG. 17, the first radio frequency processing module 404 includes a second frequency mixing unit 4041, a combiner 4042, a power amplifier 4043, and a fourth band-pass filter 4044.

An input end of the second frequency mixing unit 4041 is connected to output ends of a first band-pass filter 4022 and the second band-pass filter 4032, and an output end of the second frequency mixing unit 4041 is connected to the combiner 4042. An output end of the combiner 4042 is connected to an input end of the power amplifier 4043. An output end of the power amplifier 4043 is connected to an input end of the fourth band-pass filter 4044. An output end of the fourth band-pass filter 4044 is connected to a sending module.

The second frequency mixing unit 4041 is configured to shift the first valid signal and the first noise signal to the second carrier. The combiner 4042 is configured to combine the first valid signal and the first noise signal that are on the second carrier to obtain a first mixed signal. The power amplifier 4043 is configured to amplify the first mixed signal. The fourth band-pass filter 4044 is configured to filter out the first noise signal from the amplified first mixed signal to obtain a first to-be-sent signal.

In an example, the second carrier may be a radio frequency carrier, for example, between 300 kHz and 300 GHz.

In an example, the second frequency mixing unit 4041 includes a frequency mixer M6 and a frequency mixer M7. An input end of the frequency mixer M6 is connected to the first band-pass filter 4022, and an output end of the frequency mixer M6 is connected to a first input end of the combiner 4042. An input end of the frequency mixer M7 is connected to the second band-pass filter 4032, and an output end of the frequency mixer M7 is connected to a second input end of the combiner 4042.

The first valid signal is transmitted to the frequency mixer M6 by using the first band-pass filter 4022, and the frequency mixer M6 is configured to shift the first valid signal to the radio frequency carrier. The first noise signal is transmitted to the frequency mixer M7 by using the second band-pass filter 4032, and the frequency mixer M7 is configured to shift the first noise signal to the radio frequency carrier. The frequency mixer M6 and the frequency mixer M7 transmit the first valid signal and the first noise signal that are on the radio frequency carrier to the combiner 4042, and the combiner 4042 is configured to: superimpose the first valid signal and the first noise signal to obtain the first mixed signal, and send the first mixed signal to the power amplifier 4043 for amplification. The fourth band-pass filter 4044 is configured to filter out the first noise signal from the first mixed signal to obtain the first to-be-sent signal.

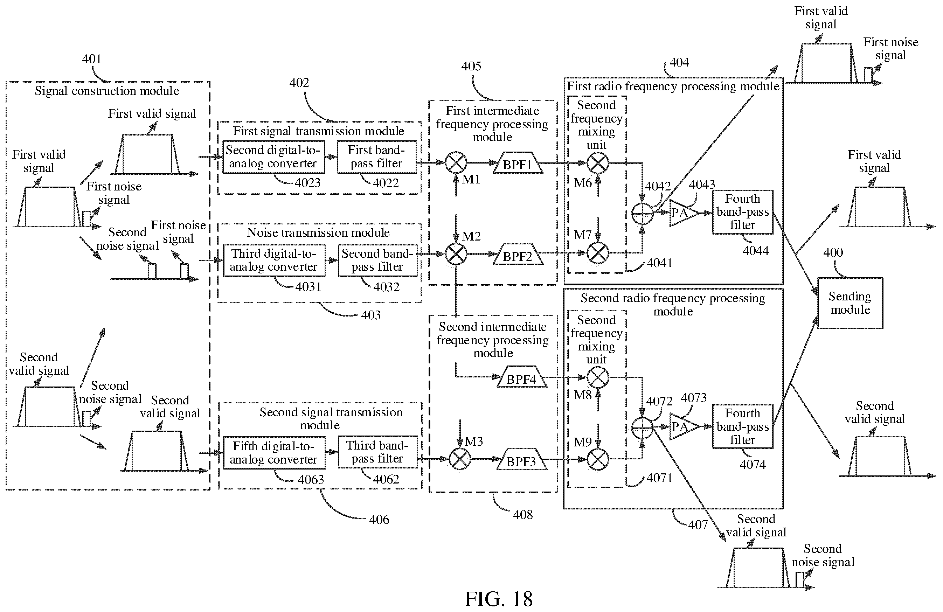

In another possible implementation of this application, as shown in FIG. 18, a difference from the signal transmission apparatus shown in FIG. 17 lies in that a plurality of signal transmission modules in a signal transmission apparatus shown in FIG. 18 share one noise transmission module. In FIG. 18, an example in which two signal transmission modules share one noise transmission module and an intermediate frequency processing module is included is used.

As shown in FIG. 18, a communication device includes: a first signal transmission module 402, a noise transmission module 403, a first intermediate frequency processing module 405, a first radio frequency processing module 404, a second signal transmission module 406, a second intermediate frequency processing module 408, and a second radio frequency processing module 407.

In an example, a second frequency mixing unit 4041 in the first radio frequency processing module 404 includes a frequency mixer M6 and a frequency mixer M7. An input end of the frequency mixer M6 is connected to an output end of a band-pass filter BPF1 in the first intermediate frequency processing module 405. An input end of the frequency mixer M7 is connected to an output end of a band-pass filter BPF2 in the first intermediate frequency processing module 405.

A structure of the second radio frequency processing module 407 is the same as that of the first radio frequency processing module 404, and includes a second frequency mixing unit 4071, a combiner 4072, a power amplifier 4073, and a fourth band-pass filter 4074.

In an example, the second frequency mixing unit 4071 in the first radio frequency processing module 404 includes a frequency mixer M8 and a frequency mixer M9. An input end of the frequency mixer M8 is connected to an output end of a band-pass filter BPF4. An input end of the frequency mixer M9 is connected to an output end of a band-pass filter BPF3. An output end of the frequency mixer M8 is connected to a first input end of the combiner 4072. An output end of the frequency mixer M9 is connected to a second input end of the combiner 4072. An output end of the combiner 4072 is connected to an input end of the power amplifier 4073. An output end of the power amplifier 4073 is connected to an input end of the fourth band-pass filter 4074. An output end of the fourth band-pass filter 4074 is connected to a sending module.

A first noise signal and a second noise signal are transmitted to a frequency mixer M5 by using a third digital-to-analog converter 4031 and a second band-pass filter 4032. The frequency mixer M5 is configured to: shift the first noise signal and the second noise signal to an intermediate frequency carrier, and transmit both the first noise signal and the second noise signal to the band-pass filter BPF2 and the band-pass filter BPF4. The band-pass filter BPF2 is configured to: screen out the first noise signal, and transmit the first noise signal to the frequency mixer M7. The band-pass filter BPF4 is configured to: screen out the second noise signal, and transmit the second noise signal to the frequency mixer M8. A second valid signal is transmitted to a frequency mixer M3 by using a fifth digital-to-analog converter 4063 and a third band-pass filter 4062. The frequency mixer M3 is configured to: shift the second valid signal to the intermediate frequency carrier, and transmit the second valid signal to the band-pass filter BPF3. The band-pass filter BPF3 is configured to transmit the second valid signal to the frequency mixer M9. The frequency mixer M8 and the frequency mixer M9 are configured to transmit the second noise signal and the second valid signal to the combiner 4072. The combiner 4072 is configured to: superimpose the second noise signal and the second valid signal to obtain a second mixed signal, and send the second mixed signal to the power amplifier 4073 for amplification. The fourth band-pass filter 4074 is configured to filter out the second noise signal from the second mixed signal to obtain a second to-be-sent signal.

In this embodiment of this application, energy of a target noise signal is 1% of energy of a target valid signal.

In the communication devices provided in embodiments of this application, FIG. 4 to FIG. 6 and FIG. 11 to FIG. 13 show structures of communication devices having no intermediate frequency processing module, and FIG. 7 to FIG. 10 and FIG. 14 to FIG. 18 show structures of communication devices having intermediate frequency processing modules. The communication device having no intermediate frequency processing module has a simple structure, and a case in which noise is amplified due to the intermediate frequency processing module does not occur. However, the target valid signal and the target noise signal need to be directly shifted from a baseband to a radio frequency carrier, and a signal requirement is high. In the structure of the communication device having the intermediate frequency processing module, the target valid signal and the target noise signal may first be shifted from the baseband to the intermediate frequency carrier, and then the target valid signal and the target noise signal may be shifted from the intermediate frequency carrier to the radio frequency carrier, so that a signal is more stable.

In embodiments of this application, a specific structure of an execution entity of a signal transmission method is not specially limited in embodiments of this application, provided that the execution entity can run a program that records code of the signal transmission method in embodiments of this application, to perform communication according to the signal transmission method in embodiments of this application. For example, the signal transmission method provided in embodiments of this application may be performed by a functional module that is in the communication device and that can invoke and execute a program, or may be performed by a component, for example, a chip, used in the communication device. The following embodiment is described by using an example in which a signal transmission method is performed by a communication device.

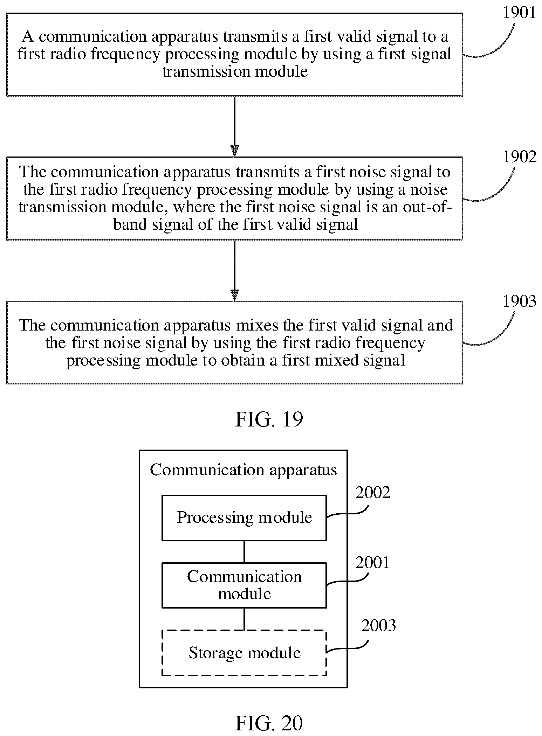

FIG. 19 is a schematic flowchart of a signal transmission method according to an embodiment of this application. The method is applied to a communication device. The communication device includes a first signal transmission module 402 and a noise transmission module 403 corresponding to the first signal transmission module 402. The signal transmission method includes the following steps.

Step 1901: The communication device transmits a first valid signal to a first radio frequency processing module 404 by using the first signal transmission module 402.

In an example, the communication device may obtain the first valid signal and a first noise signal by using a signal construction module 401.

Step 1902: The communication device transmits the first noise signal to the first radio frequency processing module 404 by using the noise transmission module 403. The first noise signal is an out-of-band signal of the first valid signal.

Step 1903: The communication device mixes the first valid signal and the first noise signal by using the first radio frequency processing module 404 to obtain a first mixed signal.

In this application, based on the first signal transmission module 402 in the communication device, the noise transmission module 403 is added, the first noise signal is constructed out of a band of the first valid signal, the first valid signal is transmitted by using the first signal transmission module 402, and the first noise signal is transmitted by using the noise transmission module 403. This improves spectrum utilization of transmitting the first valid signal by the first signal transmission module 402. Then, the first radio frequency processing module 404 shifts the first valid signal and the first noise signal to a transmit carrier, and mixes the first valid signal and the first noise signal, so that the first noise signal is at a preset location on the carrier, to reduce a peak-to-average power ratio of the first valid signal.

In a possible embodiment of this application, after step 1903, the method provided in this embodiment of this application may further include:

The communication device amplifies the first mixed signal by using the first radio frequency processing module 404.

The communication device filters out the first noise signal from the amplified first mixed signal to obtain a first to-be-sent signal.

Specifically, with reference to the communication device shown in FIG. 17, the first mixed signal is amplified by using a power amplifier 4043 in the first radio frequency processing module 404, the amplified first mixed signal is transmitted to a fourth band-pass filter 4044, and the first noise signal is filtered out from the first mixed signal to obtain the first to-be-sent signal. The first to-be-sent signal is a first valid signal on a carrier of a sending module.

In a possible implementation of this application, after the communication device filters out the first noise signal from the amplified first mixed signal to obtain the first to-be-sent signal, the method provided in this embodiment of this application may further include: The communication device sends the first to-be-sent signal by using the sending module 400.

In a possible implementation of this application, that the communication device transmits the first valid signal to the first radio frequency processing module 404 by using the first signal transmission module 402, and transmits the first noise signal to the first radio frequency processing module 404 by using the noise transmission module 403 includes:

The communication device performs digital-to-analog conversion and filtering on the first valid signal, and then transmits the first valid signal to the first radio frequency processing module 404; and
the communication device performs digital-to-analog conversion and filtering on the first noise signal, and then transmits the first noise signal to the first radio frequency processing module 404.

With reference to the structure of the communication device shown in FIG. 5, when the first signal transmission module 402 and the noise transmission module 403 share a first digital-to-analog converter 4021, that the communication device performs digital-to-analog conversion on the first valid signal and the first noise signal may be implemented in the following manner:

The communication device performs digital-to-analog conversion on the first valid signal by using the first digital-to-analog converter 4021; and
the communication device performs digital-to-analog conversion on the first noise signal by using the first digital-to-analog converter 4021.

With reference to the structure of the communication device shown in FIG. 6, when the first signal transmission module 402 and the noise transmission module 403 separately use a digital-to-analog converter, in other words, the first signal transmission module 402 includes a second digital-to-analog converter 4023, and the noise transmission module 403 includes a third digital-to-analog converter 4031, the communication device performs digital-to-analog conversion on the first valid signal. The method provided in this embodiment of this application includes: The communication device performs digital-to-analog conversion on the first valid signal by using the second digital-to-analog converter 4023 of the first signal transmission module 402. The communication device performs digital-to-analog conversion on the first noise signal. The method provided in this embodiment of this application includes: The communication device performs digital-to-analog conversion on the first noise signal by using the third digital-to-analog converter 4031 of the noise transmission module 403.

With reference to the structures of the communication devices shown in FIG. 7 to FIG. 9, before the communication device transmits the first valid signal to the first radio frequency processing module 404 by using the first signal transmission module 402, the method provided in this embodiment of this application further includes:

The communication device transmits the first valid signal to a first intermediate frequency processing module 405 by using the first signal transmission module 402; and
the communication device shifts the filtered first valid signal to a first carrier by using the first intermediate frequency processing module 405.

Before the communication device transmits the first noise signal to the first radio frequency processing module 404 by using the noise transmission module 403, the method provided in this embodiment of this application further includes:

The communication device transmits the first noise signal to the first intermediate frequency processing module 405 by using the noise transmission module 403; and
the communication device shifts the filtered first noise signal to the first carrier by using the first intermediate frequency processing module 405.

In an actual process, the communication device usually has a plurality of signal transmission modules, and different signal transmission modules are configured to transmit different valid signals. Therefore, the method provided in this embodiment of this application further includes a communication device of a plurality of signal transmission modules, for example, a first signal transmission module and a second signal transmission module.

With reference to the structure of the communication device shown in FIG. 10, in comparison with the structure shown in FIG. 5, in this structure, the communication device further includes a second signal transmission module 406 and a second radio frequency processing module 407. The second signal transmission module 406 and the first signal transmission module 402 share the noise transmission module 403. The method provided in this embodiment of this application further includes:

The communication device transmits a second valid signal to the second radio frequency processing module 407 by using the second signal transmission module 406.

The communication device transmits a second noise signal to the second radio frequency processing module 407 by using the noise transmission module 403. The second noise signal is an out-of-band signal of the second valid signal.

The communication device mixes the second valid signal and the second noise signal by using the second radio frequency processing module 407 to obtain a second mixed signal.

In a possible embodiment of this application, after the communication device mixes the second valid signal and the second noise signal by using the second radio frequency processing module 407 to obtain the second mixed signal, the method provided in this embodiment of this application further includes:

The communication device amplifies the second mixed signal by using the second radio frequency processing module 407; and
the communication device filters out the second noise signal from the amplified second mixed signal by using the second radio frequency processing module 407 to obtain a second to-be-sent signal.

In a possible implementation of this application, after the communication device filters out the second noise signal from the amplified second mixed signal to obtain the second to-be-sent signal, the method provided in this embodiment of this application may further include: The communication device sends the second to-be-sent signal by using the sending module 400.

With reference to the structure of the communication device shown in FIG. 11, the communication device transmits the second valid signal to the second radio frequency processing module 407 by using the second signal transmission module 406, and transmits the second noise signal to the second radio frequency processing module 407 by using the noise transmission module 403. The method provided in this embodiment of this application includes:

The communication device performs digital-to-analog conversion and filtering on the second valid signal transmitted on the second signal transmission module 406, and then transmits the second valid signal to the second radio frequency processing module 407; and
the communication device performs digital-to-analog conversion and filtering on the second noise signal transmitted on the noise transmission module 403, and then transmits the second noise signal to the second radio frequency processing module 407.

Details are shown in FIG. 11. The communication device performs digital-to-analog conversion on the second valid signal transmitted on the second signal transmission module 406. The method provided in this embodiment of this application includes:

The communication device performs digital-to-analog conversion on the second valid signal by using a fourth digital-to-analog converter 4061.

The communication device performs digital-to-analog conversion on the second noise signal transmitted on the noise transmission module 403. The method provided in this embodiment of this application includes:

The communication device performs digital-to-analog conversion on the second noise signal by using the fourth digital-to-analog converter 4061. The fourth digital-to-analog converter 4061 is a digital-to-analog converter shared by the second signal transmission module and the noise transmission module.

With reference to the structure of the communication device shown in FIG. 13, in comparison with the structures of the communication devices shown in FIG. 11 and FIG. 12, a difference lies in that, in this structure, the noise transmission module 402 uses a digital-to-analog converter independently. The communication device performs digital-to-analog conversion on the second valid signal transmitted on the second signal transmission module 406. The method provided in this embodiment of this application further includes:

The communication device performs digital-to-analog conversion on the second valid signal by using a fifth digital-to-analog converter 4063 of the second signal transmission module; and
the communication device performs digital-to-analog conversion on the second noise signal by using the third digital-to-analog converter 4031 of the noise transmission module 403.

With reference to the structures of the communication devices shown in FIG. 13 to FIG. 16, before the communication device transmits the second valid signal to the second radio frequency processing module 407 by using the second signal transmission module 406, and transmits the second noise signal to the second radio frequency processing module 407 by using the noise transmission module 403, the method provided in this embodiment of this application further includes:

The communication device transmits the second valid signal to a second intermediate frequency processing module 408 by using the second signal transmission module 406;
the communication device shifts, to the first carrier by using the second intermediate frequency processing module 408, the second valid signal filtered by using a third band-pass filter 4062;
the communication device transmits the second noise signal to the second intermediate frequency processing module 408 by using the noise transmission module 403; and
the communication device shifts, to the first carrier by using the second intermediate frequency processing module 408, the second noise signal filtered by using the second band-pass filter 4032 in the noise transmission module 403.

In a possible implementation of this application, with reference to the structure of the communication device shown in FIG. 16, the method provided in this embodiment of this application further includes:
The communication device transmits the second valid signal to the second intermediate frequency processing module 408 by using the second signal transmission module 406, and transmits a third noise signal to the first intermediate frequency processing module 405 and the second intermediate frequency processing module 408 by using the noise transmission module 403. The third noise signal includes the first noise signal and the second noise signal.

It may be understood that the signal construction module constructs only one noise signal, and the noise signal includes the first noise signal corresponding to the first valid signal and the second noise signal corresponding to the second valid signal.

With reference to the structures of the communication devices shown in FIG. 7 to FIG. 9, FIG. 13 to FIG. 16, and FIG. 18, either the first intermediate frequency processing module 405 or the second intermediate frequency processing module 408 includes a first frequency mixing unit 4051 and a filtering processing unit 4052. The method provided in this embodiment of this application includes:
The communication device shifts a target valid signal and a target noise signal to the first carrier by using the first frequency mixing unit 4051, and further transmits the target valid signal and the target noise signal that are on the first carrier to the filtering processing unit 4052.

The communication device sends the target valid signal and the target noise signal to a target radio frequency processing module by using the filtering processing unit 4052. The target valid signal is the first valid signal, and the target noise signal is the first noise signal. Alternatively, the target valid signal is the second valid signal, and the target noise signal is the second noise signal.

In an example, as shown in FIG. 13, the first intermediate frequency processing module 405 includes the first frequency mixing unit 4051 and the filtering processing unit 4052. The first frequency mixing unit 4051 includes a frequency mixer M1 and a frequency mixer M2. The filtering processing unit 4052 includes a band-pass filter BPF1 and a band-pass filter BPF2. The communication device transmits the first valid signal to the frequency mixer M1 by using a first band-pass filter 4022, and the frequency mixer M1 shifts the first valid signal to the first carrier. The communication device then transmits the first valid signal that is on the first carrier to the band-pass filter BPF1 by using the frequency mixer M1. The band-pass filter BPF1 performs filtering processing on the first valid signal, and transmits the first valid signal to the first radio frequency processing module 404.

In an example, the communication device transmits the first noise signal to the frequency mixer M2 by using the second band-pass filter 4032, and the frequency mixer M2 shifts the first noise signal to the first carrier. The communication device then transmits the first noise signal that is on the first carrier to the band-pass filter BPF2 by using the frequency mixer M2. The band-pass filter BPF2 performs filtering processing on the first noise signal, and transmits the first noise signal to the first radio frequency processing module 404.

With reference to the structures of the communication devices shown in FIG. 17 and FIG. 18, the target radio frequency processing module includes a second frequency mixing unit, a combiner, a power amplifier, and a fourth band-pass filter. The target radio frequency processing module is the first radio frequency processing module 404 or the second radio frequency processing module 407.

With reference to FIG. 17, an example in which the target radio frequency processing module is the first radio frequency processing module 404 is used. The method provided in this embodiment of this application includes: The communication device mixes the first valid signal and the first noise signal by using the first radio frequency processing module 404 to obtain a target mixed signal. This step includes:
The communication device shifts the first valid signal and the first noise signal to a second carrier by using the second frequency mixing unit 4041.

The communication device mixes the first valid signal and the first noise signal that are on the second carrier by using the combiner 4042 to obtain the first mixed signal.

The communication device filters out the first noise signal from the first mixed signal by using the first radio frequency processing module 404 to obtain the first to-be-sent signal. The method provided in this embodiment of this application includes:
The communication device filters out the first noise signal from the first mixed signal by using the fourth band-pass filter 4044 to obtain the first to-be-sent signal.

In an example, with reference to FIG. 17, the second frequency mixing unit 4041 includes a frequency mixer M6 and a frequency mixer M7. The communication device transmits the first valid signal to the frequency mixer M6 by using the first band-pass filter 4022, and transmits the first noise signal to the frequency mixer M7 by using the second band-pass filter 4032. The frequency mixer M6 and the frequency mixer M7 shift the first valid signal and the first noise signal to the second carrier respectively, and transmit the first valid signal and the first noise signal to the combiner 4042. The communication device combines the first valid signal and the first noise signal that are on the second carrier by using the combiner 4042 to obtain the first mixed signal. The communication device amplifies the first mixed signal by using the power amplifier 4043, and then filters out the first noise signal from the amplified first mixed signal by using the fourth band-pass filter 4044.

The foregoing mainly describes the solutions in embodiments of this application from a perspective of interaction between network elements. It can be understood that to implement the foregoing functions, the network elements such as a communication apparatus include corresponding structures and/or software modules for executing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. During actual implementation, another division manner may be used.

The foregoing describes the method in embodiments of this application with reference to FIG. 4 to FIG. 18. The following describes a communication apparatus that is provided in embodiments of this application and that performs the foregoing method. A person skilled in the art may understand that the method and the apparatus may be mutually combined and referenced. The communication apparatus provided in embodiments of this application may perform the steps performed by the communication apparatus in the foregoing analysis methods.

When an integrated unit is used, FIG. 20 shows a communication apparatus in the foregoing embodiment. The communication apparatus may include a communication module 2001 and a processing module 2002.

In an optional implementation, the communication apparatus may further include a storage module 2003, configured to store program code and data of the communication apparatus.

In an example, the communication apparatus is a sending device, or is a chip used in a sending device. In this case, the communication module 2001 is configured to support the communication apparatus in communicating with an external network element (for example, a receiving device). For example, the communication module 2001 is configured to perform a signal receiving and sending operation performed by the communication apparatus in the foregoing method embodiment, for example, sending a to-be-sent signal. The processing module 2002 is configured to perform a processing operation performed by the communication apparatus in the foregoing method embodiment, for example, step 1901 to step 1903, and another processing operation performed by the communication apparatus.

It should be noted that the communication module 2001 shown in FIG. 20 may alternatively be replaced with a communication unit, and the processing module 2002 may alternatively be replaced with to a processing unit. The storage module 2003 may alternatively be replaced with a storage unit. The processing unit is configured to: control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 2002 may be a processor or controller, for example, the processing module 2002 may be a central processing unit, a general-purpose processor, a digital signal processor, an application-specific integrated circuit, a field programmable gate array or another programmable logic device, a transistor logic device, a hardware component, or any combination thereof. The processing module 2002 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

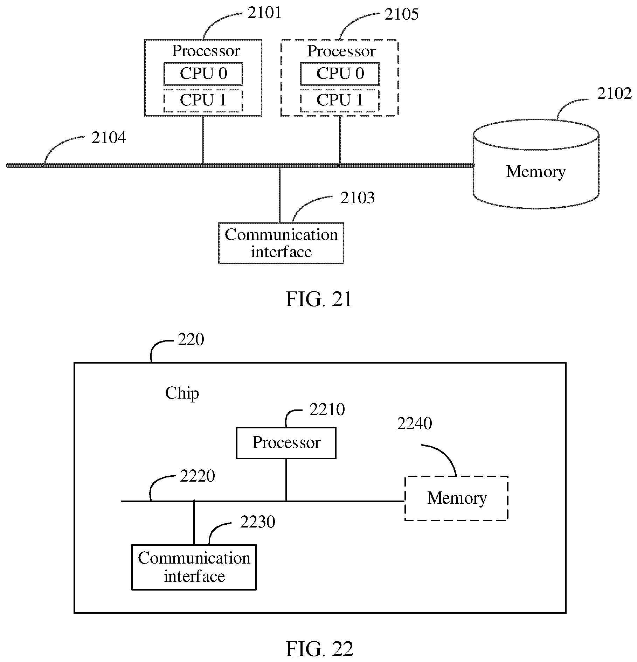

When the processing module 2002 is a processor 2101 or a processor 2105, the communication module 2001 is a transceiver 2103, and the storage module 2003 is a memory 2102, the communication apparatus in this application may use a structure shown in FIG. 21.

FIG. 21 is a diagram of a hardware structure of a communication apparatus according to an embodiment of this application. For a sending device in this embodiment of this application, refer to the diagram of the structure of the communication apparatus shown in FIG. 21. The communication apparatus includes a processor 2101, a communication line 2104, and at least one transceiver (a transceiver 2103 is used as an example for description in FIG. 21).

The processor 2101 may be a general-purpose central processing unit (central processing unit, CPU), a microprocessor, an application-specific integrated circuit (application-specific integrated circuit, ASIC), or one or more integrated circuits for controlling program execution of the solutions in this application.

The communication line 2104 may include a path through which information transmission is performed between the foregoing components.

The transceiver 2103 is configured to exchange information with another apparatus. For example, the transceiver 2103 may use any apparatus of a transceiver type, and is configured to communicate with another device or a communication network, for example, an Ethernet, a radio access network (radio access network, RAN), or a wireless local area network (wireless local area network, WLAN).

Optionally, the communication device may further include a memory 2102.

The memory 2102 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor through the communication line 2104. The memory may alternatively be integrated with the processor.

The memory 2102 is configured to store computer-executable instructions for performing the solutions in this application, and the processor 2101 controls execution of the computer-executable instructions. The processor 2101 is configured to execute the computer-executable instructions stored in the memory 2102, to implement a signal transmission method provided in the following embodiment of this application.

Optionally, the computer-executable instructions in this embodiment of this application may also be referred to as application program code. This is not specifically limited in this embodiment of this application.

During specific implementation, in an embodiment, the processor 2101 may include one or more CPUs, for example, a CPU 0 and a CPU 1 in FIG. 21.

During specific implementation, in an embodiment, the communication device may include a plurality of processors, for example, the processor 2101 and a processor 2105 in FIG. 21. Each of the processors may be a single-core (single-CPU) processor, or may be a multi-core (multi-CPU) processor. The processor herein may be one or more devices, circuits, and/or processing cores configured to process data (for example, computer program instructions).

FIG. 22 is a diagram of a structure of a chip 220 according to an embodiment of this application. The chip 220 includes one or more than two (including two) processors 2210 and a communication interface 2230.

Optionally, the chip 220 further includes a memory 2240. The memory 2240 may include a read-only memory and a random access memory, and provide operation instructions and data for the processor 2210. A part of the memory 2240 may further include a non-volatile random access memory (non-volatile random access memory, NVRAM).

In some implementations, the memory 2240 stores the following elements: an execution module or a data structure, a subset thereof, or an extended set thereof.

In this embodiment of this application, a corresponding operation is performed by invoking the operation instructions (where the operation instructions may be stored in an operating system) stored in the memory 2240.

In a possible implementation, structures of chips used by sending devices are similar, and different apparatuses may use different chips to implement respective functions.

The processor 2210 controls a processing operation of the sending device, and the processor 2210 may also be referred to as a central processing unit (central processing unit, CPU).

The memory 2240 may include a read-only memory and a random access memory, and provide instructions and data to the processor 2210. A part of the memory 2240 may further include an NVRAM. For example, during application, the memory 2240, the communication interface 2230, and the memory 2240 are coupled together by using a bus system 2220. In addition to a data bus, the bus system 2220 may further include a power bus, a control bus, a status signal bus, and the like. However, for clarity of description, various buses are marked as the bus system 2220 in FIG. 22.

The methods disclosed in the foregoing embodiments of this application may be applied to the processor 2210, or implemented by the processor 2210. The processor 2210 may be an integrated circuit chip and has a signal processing capability. In an implementation process, steps of the methods may be completed by using an integrated logic circuit of hardware in the processor 2210 or instructions in a form of software. The processor 2210 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 2240. The processor 2210 reads information in the memory 2240, and completes the steps of the methods in combination with hardware of the processor 2210.

In a possible implementation, the communication interface 2230 is configured to perform the receiving and sending steps of the communication apparatus in the foregoing signal transmission method embodiments. The processor 2210 is configured to perform processing steps of the communication apparatus in the foregoing signal transmission method embodiments.

The communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

According to an aspect, a computer-readable storage medium is provided. The computer-readable storage medium stores instructions, and when the instructions are run, functions performed by the communication apparatus in FIG. 19 are implemented.

According to an aspect, a computer program product including instructions is provided. The computer program product includes the instructions, and when the instructions are run, functions performed by the communication apparatus in FIG. 19 are implemented.

According to an aspect, a chip is provided. The chip is used in a communication apparatus, and the chip includes at least one processor and a communication interface. The communication interface is coupled to the at least one processor, and the processor is configured to run instructions, to implement functions performed by the communication apparatus in FIG. 19.

An embodiment of this application provides a wireless communication system, including a sending device and one or more receiving devices. The sending device is configured to perform at least the signal transmission method in the foregoing embodiments. The receiving device is configured to receive at least a signal from the sending device.

An embodiment of this application provides a base station, including a signal transmission apparatus and a transceiver. A structure of the signal transmission apparatus is shown in FIG. 4 to FIG. 18. Optionally, the signal transmission apparatus is configured to perform the foregoing signal transmission method.

An embodiment of this application provides a base station, including at least one processor. The at least one processor is coupled to a memory, and the at least one processor is configured to run instructions stored in the memory, to perform the foregoing signal transmission method.

Optionally, the base station in this embodiment of this application may further include a transmitter, and the base station is configured to transmit a signal by using the transmitter.

Optionally, the base station may further include a receiver, and the base station is configured to receive, by using the receiver, a signal from another device.

Optionally, the receiver and the transmitter of the base station may be integrated together as a transceiver. This is not limited in this embodiment of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A signal transmission method, applied to a communication device, wherein the communication device comprises a first signal transmission module and a noise transmission module corresponding to the first signal transmission module, and the signal transmission method comprises:
transmitting a first valid signal to a first radio frequency processing module by using the first signal transmission module;
transmitting a first noise signal to the first radio frequency processing module by using the noise transmission module, wherein the first noise signal is an out-of-band signal of the first valid signal; and
mixing the first valid signal and the first noise signal by using the first radio frequency processing module to obtain a first mixed signal.

2. The signal transmission method according to claim **1,** wherein after mixing the first valid signal and the first noise signal by using the first radio frequency processing module to obtain the first mixed signal, the method further comprises:
amplifying the first mixed signal by using the first radio frequency processing module; and
filtering out the first noise signal from the amplified first mixed signal to obtain a first to-be-sent signal.

3. The signal transmission method according to claim **1,** wherein transmitting the first valid signal to the first radio frequency processing module by using the first signal transmission module, and transmitting the first noise signal to the first radio frequency processing module by using the noise transmission module comprise:
performing digital-to-analog conversion and filtering on the first valid signal, and then transmitting the first valid signal to the first radio frequency processing module; and
performing digital-to-analog conversion and filtering on the first noise signal, and then transmitting the first noise signal to the first radio frequency processing module.

4. The signal transmission method according to claim 3, wherein performing digital-to-analog conversion on the first valid signal comprises:
performing digital-to-analog conversion on the first valid signal by using a first digital-to-analog converter, wherein the first digital-to-analog converter is a digital-to-analog converter shared by the first signal transmission module and the noise transmission module; and
performing digital-to-analog conversion on the first noise signal comprises:
performing digital-to-analog conversion on the first noise signal by using the first digital-to-analog converter.

5. The signal transmission method according to claim 3, wherein performing digital-to-analog conversion on the first valid signal comprises:
performing digital-to-analog conversion on the first valid signal by using a second digital-to-analog converter of the first signal transmission module; and
performing digital-to-analog conversion on the first noise signal comprises:
performing digital-to-analog conversion on the first noise signal by using a third digital-to-analog converter of the noise transmission module.

6. The signal transmission method according to any one of claims 1 to 5, wherein before transmitting the first valid signal to the first radio frequency processing module by using the first signal transmission module, the method further comprises:
transmitting the first valid signal to a first intermediate frequency processing module by using the first signal transmission module; and
shifting, to a first carrier by using the first intermediate frequency processing module, the first valid signal filtered by using a first band-pass filter; and
before transmitting the first noise signal to the first radio frequency processing module by using the noise transmission module, the method further comprises:
transmitting the first noise signal to the first intermediate frequency processing module by using the noise transmission module; and
shifting, to the first carrier by using the first intermediate frequency processing module, the first noise signal filtered by using a second band-pass filter.

7. The signal transmission method according to any one of claims 1 to 6, wherein the communication device further comprises a second signal transmission module, the second signal transmission module and the first signal transmission module share the noise transmission module, and the method further comprises:
transmitting a second valid signal to a second radio frequency processing module by using the second signal transmission module;
transmitting a second noise signal to the second radio frequency processing module by using the noise transmission module, wherein the second noise signal is an out-of-band signal of the second valid signal; and
mixing the second valid signal and the second noise signal by using the second radio frequency processing module to obtain a second mixed signal.

8. The signal transmission method according to claim 7, wherein after mixing the second valid signal and the second noise signal by using the second radio frequency processing module to obtain the second mixed signal, the method further comprises:
amplifying the second mixed signal by using the second radio frequency processing module; and
filtering out the second noise signal from the amplified second mixed signal by using the second radio frequency processing module to obtain a second to-be-sent signal.

9. The signal transmission method according to claim 8, wherein transmitting the second valid signal to the second radio frequency processing module by using the second signal transmission module, and transmitting the second noise signal to the second radio frequency processing module by using the noise transmission module comprise:
performing digital-to-analog conversion and filtering on the second valid signal transmitted on the second signal transmission module, and then transmitting the second valid signal, to the second radio frequency processing module; and
performing digital-to-analog conversion and filtering on the second noise signal transmitted on the noise transmission module, and then transmitting the second noise signal to the second radio frequency processing module.

10. The signal transmission method according to claim 9, wherein performing digital-to-analog conversion on the second valid signal transmitted on the second signal transmission module comprises:
performing digital-to-analog conversion on the second valid signal by using a fourth digital-to-analog converter; and
performing digital-to-analog conversion on the second noise signal transmitted on the noise transmission module comprises:
performing digital-to-analog conversion on the second noise signal by using the fourth digital-to-analog converter, wherein the fourth digital-to-analog converter is a digital-to-analog converter shared by the second signal transmission module and the noise transmission module.

11. The signal transmission method according to claim 9, wherein performing digital-to-analog conversion on the second valid signal transmitted on the second signal transmission module further comprises:
performing digital-to-analog conversion on the second valid signal by using a fifth digital-to-analog converter of the second signal transmission module; and
performing digital-to-analog conversion on the first noise signal by using the third digital-to-analog converter of the noise transmission module.

12. The signal transmission method according to any one of claims 7 to 11, wherein before transmitting the second valid signal to the second radio frequency processing module by using the second signal transmission module, and transmitting the second noise signal to the second radio frequency processing module by using the noise transmission module, the method further comprises:
transmitting the second valid signal to a second intermediate frequency processing module by using the second signal transmission module;
shifting, to the first carrier by using the second intermediate frequency processing module, the second valid signal filtered by using a third band-pass filter;
transmitting the second noise signal to the second intermediate frequency processing module by using the noise transmission module; and
shifting, to the first carrier by using the second intermediate frequency processing module, the second noise signal filtered by using the second band-pass filter in the noise transmission module.

13. The signal transmission method according to claim 7, wherein the method further comprises:
transmitting the second valid signal to the second radio frequency processing module by using the second signal transmission module, and transmitting a third noise signal to the second radio frequency processing module by using the noise transmission module, wherein
the third noise signal comprises the first noise signal and the second noise signal.

14. The signal transmission method according to claim 6 or 12, wherein either the first intermediate frequency processing module or the second intermediate frequency processing module comprises a first frequency mixing unit and a filtering processing unit, wherein
the first frequency mixing unit is configured to: shift a target valid signal and a target noise signal to the first carrier, and transmit the target valid signal and the target noise signal that are on the first carrier to the filtering processing unit; and
the filtering processing unit is configured to send the target valid signal and the target noise signal to the target radio frequency processing module, wherein
the target valid signal is the first valid signal, and the target noise signal is the first noise signal; or the target valid signal is the second valid signal, and the target noise signal is the second noise signal.

15. The signal transmission method according to any one of claims 1 to 14, wherein the target radio frequency processing module comprises a second frequency mixing unit, a combiner, a power amplifier, and a fourth band-pass filter, and the target radio frequency processing module is the first radio frequency processing module or the second radio frequency processing module;
mixing the target valid signal and the target noise signal by using the target radio frequency processing module to obtain a target mixed signal comprises: shifting the target valid signal and the target noise signal to a second carrier by using the second frequency mixing unit; and
mixing the target valid signal and the target noise signal that are on the second carrier by using the combiner to obtain the target mixed signal; and
filtering out the target noise signal from the target mixed signal by using the target radio frequency processing module to obtain a target to-be-sent signal comprises:
filtering out the target noise signal from the target mixed signal by using a fifth band-pass filter to obtain the target to-be-sent signal.

16. A communication apparatus, comprising: a first signal transmission module, a noise transmission module corresponding to the first signal transmission module, and a first radio frequency processing module connected to the first signal transmission module and the noise transmission module, wherein
the first signal transmission module is configured to transmit a first valid signal to the first radio frequency processing module;
the noise transmission module is configured to transmit a first noise signal corresponding to the first valid signal to the first radio frequency processing module, wherein the first noise signal is an out-of-band signal of the first valid signal; and
the first radio frequency processing module is configured to mix the first valid signal and the first noise signal to obtain a first mixed signal.

17. The communication apparatus according to claim 16, wherein the first radio frequency processing module is further configured to: amplify the first mixed signal, and filter out the first noise signal from the amplified first mixed signal to obtain a first to-be-sent signal.

18. The communication apparatus according to claim 16, wherein the first signal transmission module comprises a first digital-to-analog converter and a first band-pass filter connected to the first digital-to-analog converter, and the noise transmission module comprises a second band-pass filter connected to the first digital-to-analog converter.

19. The communication apparatus according to claim 18, wherein the first digital-to-analog converter is configured to: perform digital-to-analog conversion on the first valid signal, and then transmit the first valid signal to the first band-pass filter;
the first band-pass filter is configured to: perform filtering processing on the first valid signal obtained through the analog-to-digital conversion, and send the first valid signal to the first radio frequency processing module;
the first digital-to-analog converter is further configured to: perform digital-to-analog conversion on the first noise signal, and then transmit the first noise signal to the second band-pass filter; and
the second band-pass filter is configured to: perform filtering processing on the first noise signal obtained through the digital-to-analog conversion by using the first digital-to-analog converter, and send the first noise signal to the first radio frequency processing module.

20. The communication apparatus according to claim 16, wherein the first signal transmission module comprises a second digital-to-analog converter and a first band-pass filter connected to the second digital-to-analog converter, and the noise transmission module comprises a third digital-to-analog converter and a second band-pass filter connected to the third digital-to-analog converter.

21. The communication apparatus according to claim 20, wherein the second digital-to-analog converter is configured to: perform digital-to-analog conversion on the first valid signal, and then transmit the first valid signal to the first band-pass filter;
the first band-pass filter is configured to: perform filtering processing on the first valid signal obtained through the analog-to-digital conversion, and send the first valid signal to the first radio frequency processing module;
the third digital-to-analog converter is configured to: perform digital-to-analog conversion on the first noise signal, and then transmit the first noise signal to the second band-pass filter; and
the second band-pass filter is configured to: perform filtering processing on the first noise signal obtained through the digital-to-analog conversion by using the first digital-to-analog converter, and send the first noise signal to the first radio frequency processing module.

22. The communication apparatus according to any one of claims 16 to 21, wherein the apparatus further comprises a first intermediate frequency processing module, wherein
an input end of the first intermediate frequency processing module is connected to the first signal transmission module and the noise transmission module, and an output end of the first intermediate frequency processing module is connected to an input end of the first radio frequency processing module.

23. The communication apparatus according to claim 22, wherein the first intermediate frequency processing module is configured to: shift, to a first carrier, the first valid signal and the first noise signal that are input to the first intermediate frequency processing module, perform filtering processing on the first valid signal and the first noise signal, and then transmit the first valid signal and the first noise signal to the first radio frequency processing module.

24. The communication apparatus according to any one of claims 16 to 22, wherein the apparatus further comprises a second signal transmission module and a second radio frequency processing module connected to the second signal transmission module, and the second signal transmission module and the first signal transmission module share the noise transmission module, wherein
the second signal transmission module is configured to transmit a second valid signal to the second radio frequency processing module by using the second signal transmission module;
the noise transmission module is configured to transmit a second noise signal corresponding to the second valid signal to the second radio frequency processing module, wherein the second noise signal is an out-of-band signal of the second valid signal; and
the second radio frequency processing module is configured to mix the second valid signal and the second noise signal to obtain a second mixed signal.

25. The communication apparatus according to claim 24, wherein the apparatus further comprises a second intermediate frequency processing module, wherein
an input end of the second intermediate frequency processing module is connected to the second signal transmission module and the noise transmission module, and an output end of the second intermediate frequency processing module is connected to an input end of the second radio frequency processing module.

26. The communication apparatus according to claim 23 or 25, wherein either the first intermediate frequency processing module or the second intermediate frequency processing module comprises a first frequency mixing unit and a filtering processing unit, wherein
the first frequency mixing unit is configured to: shift a target valid signal and a target noise signal to the first carrier, and transmit the target valid signal and the target noise signal that are on the first carrier to the filtering processing unit; and
the filtering processing unit is configured to: perform filtering processing on the target valid signal and the target noise signal, and send the target valid signal and the target noise signal to the target radio frequency processing module, wherein the target radio frequency processing module is the first radio frequency processing module or the second radio frequency processing module, wherein
the target valid signal is the first valid signal, and the target noise signal is the first noise signal; or the target valid signal is the second valid signal, and the target noise signal is the second noise signal.

27. The communication apparatus according to any one of claims 16 to 26, wherein the target radio frequency processing module comprises a second frequency mixing unit, a combiner, a power amplifier, and a fourth band-pass filter, and the target radio frequency processing module is the first radio frequency processing module or the second radio frequency processing module, wherein
the second frequency mixing unit is configured to shift the target valid signal and the target noise signal to a second carrier;
the combiner is configured to mix the target valid signal and the target noise signal to obtain a target mixed signal; and
the fourth band-pass filter is configured to filter out the target noise signal from the target mixed signal to obtain a target to-be-sent signal.

28. A wireless communication system, wherein the system comprises the communication apparatus according to any one of claims 16 to 27 and a receiving device, and the receiving device is configured to receive a signal from the communication apparatus.

29. A computer-readable storage medium, comprising computer instructions, wherein when the computer instructions are run on a base station, the base station performs the method according to any one of claims 1 to 15.

30. A chip, wherein the chip comprises a processor and a communication interface, the communication interface is coupled to the processor, the processor is configured to run a computer program or instructions, to implement the method according to any one of claims 1 to 15, and the communication interface is configured to communicate with a module other than the chip.

31. A base station, comprising at least one processor, wherein the at least one processor is coupled to a memory, and the at least one processor is configured to run instructions stored in the memory to perform the method according to any one of claims 1 to 15.
